# EUROPEAN PATENT APPLICATION

(11) **EP 4 730 118 A1**
(43) Date of publication of application: **22.04.2026**
(21) Application number: 23951922.6
(22) Date of filing: 15.09.2023
(51) Int. Cl.: G06F 9/451

(54) **INTERFACE DISPLAY METHOD, ELECTRONIC DEVICE, STORAGE MEDIUM, AND CHIP**

(71) Applicant: Honor Device Co., Ltd., Shenzhen, Guangdong 518040 (CN)
(72) Inventor: LIU, Rui, Shenzhen, Guangdong 518040 (CN)
(74) Representative: Henselmann, Alexander Gerhard
(86) International application number: PCT/CN2023/119233
(87) International publication number: WO 2025/054993

(57) **Abstract**

This application provides an interface display method, an electronic device, a storage medium, and a chip, and relates to the field of image processing technologies. The method is applicable to an animation effect period of switching from displaying an interface of a first application to displaying a system desktop or a multi-task interface. The first application is an application that needs to draw a layer by using a Surface View in a display process. The following may be set in the animation effect period: temporarily preventing a GPU from rendering a layer drawn based on the Surface View, to reduce load of the GPU. This method can reduce phenomena of stuttering or screen freezing that are caused by an excessively heavy load of the GPU in the animation effect period.

## Description

### TECHNICAL FIELD

This application relates to the field of image processing technologies, and in particular, to an interface display method, an electronic device, a storage medium, and a chip.

### BACKGROUND

An operating system may provide a plurality of view classes, such as a view class and a SurfaceView view class. The view class draws a picture on a UI main thread, and the SurfaceView class redraws a picture on a separate new thread. Therefore, the SurfaceView class can avoid a problem such as blocking of the UI main thread. In some high image refreshing scenarios, the SurfaceView can provide better user experience. However, when displaying some relatively complex content, an electronic device often presents a phenomenon of stuttering or screen freezing.

### SUMMARY

This application provides an interface display method, an electronic device, a storage medium, and a chip, to reduce phenomena of stuttering or screen freezing that occur when an electronic device displays some relatively complex content.

To achieve the foregoing objective, the following technical solution is used in a first aspect of this application:
receiving a first operation of a user;
starting a first application in response to the first operation, where a layer of the first application includes a layer drawn by using a view and a layer drawn by using a SurfaceView; and
displaying an application interface of the first application after the first application is started, where
in a process of displaying the application interface of the first application, the method further includes:
   rendering a first layer of the first application, where the first layer is a layer drawn by using the view;
   rendering a second layer of the first application, where the second layer is a layer drawn by using the SurfaceView;
   composing the first layer and the second layer to obtain a third layer;
   displaying a first interface of the first application, where the first interface is obtained based on the third layer;
   receiving a second operation of the user; and
   switching, in response to the second operation, from displaying the first application to displaying a second application, where
   in a process of switching from displaying the first application to displaying the second application, the method further includes:
      rendering a fourth layer of the first application, where the fourth layer is a layer drawn by using the view;
      rendering a fifth layer of the second application, where the fifth layer is a layer drawn by using the view;
      composing the fourth layer and the fifth layer to obtain a sixth layer; and
      displaying a second interface in the switching process, where the second interface is obtained based on the sixth layer.

In this application, an application interface of the second application may be a system desktop or a multi-task interface. The first application is an application that includes a layer drawn by using the SurfaceView, for example, a map application, a video application, or a game application. In the process of displaying the application interface of the first application, the view needs to be used to draw a layer, and the SurfaceView also needs to be used to draw a layer. Therefore, in the process of displaying the application interface of the first application, a GPU not only needs to render a layer drawn by using the view, but also needs to render a layer drawn by using the SurfaceView. Likewise, a composed layer also includes a layer drawn by the first application by using the view and a layer drawn by the first application by using the SurfaceView. The first interface belongs to the application interface of the first application. In a process of switching from displaying the application interface of the first application to the application interface of the second application, a layer drawn by using the SurfaceView may no longer be rendered by using the GPU. Similarly, a composed layer does not include a layer drawn by the first application by using the SurfaceView. The second interface is not an interface switched to of the second application, but an interface displayed in the switching process. In this way, load of the GPU can be reduced, thereby reducing phenomena of stuttering or screen freezing that are caused by an excessively heavy load of the GPU.

In another implementation of the first aspect, before the rendering a second layer of the first application, the method further includes:
applying for a first buffer from a first buffer queue; and
drawing a layer in the first buffer by using the SurfaceView, to obtain the second layer of the first application.

In this application, before the GPU renders a layer drawn by using the SurfaceView, a rendering thread further needs to apply for a buffer from the first buffer queue corresponding to the SurfaceView, and draw a layer in the buffer.

In another implementation of the first aspect, the method is applied to an electronic device, the electronic device includes a launcher and the first application, and after the receiving a second operation of the user, the method further includes:
determining, by the launcher based on the second operation, to switch from the application interface of the first application to an application interface of the second application;
sending, by the launcher, animation effect start information and first duration to the first application, where after the first application receives the animation effect start information and the first duration, a task in which a rendering thread of the first application applies for a buffer from the first buffer queue is in a wait state; and
after the first duration following reception of the animation effect start information by the first application, restoring, to an execution state, the task in which the rendering thread applies for the buffer from the first buffer queue.

In this application, as described above, before the GPU rendering a layer drawn by using the SurfaceView, the rendering thread further needs to apply for a buffer from the first buffer queue corresponding to the SurfaceView, and draw a layer in the buffer. Therefore, after an animation effect starts, the task in which the rendering thread applies for the buffer from the first buffer queue may be set to wait for specific duration. The first duration is estimated duration of the process of switching from displaying the first application to displaying the second application. When the task in which the rendering thread applies for the buffer from the first buffer queue is in the wait state, the rendering thread cannot successfully obtain the buffer through application. Therefore, a GL thread cannot execute a subsequent task of drawing a layer by using the SurfaceView. Correspondingly, the GPU also does not execute a task of rendering a layer drawn by using the Surface View, thereby reducing load of the GPU. After the first duration, it is estimated that the animation effect ends, and setting in an animation effect period may be restored to an original state, that is, the wait state of the task in which the rendering thread applies for the buffer from the first buffer queue is ended, so that the task in which the rendering thread applies for the buffer from the first buffer queue is restored to the execution state.

In another implementation of the first aspect, the electronic device further includes a SurfaceFlinger, and after the first application is started, the method further includes:
registering, by the first application, with a listener; and
sending, by the first application, the listener of the first application and a package name of the first application to the SurfaceFlinger; and storing, by the SurfaceFlinger, the package name of the first application and the listener of the first application.

The sending, by the launcher, animation effect start information and first duration to a first application includes:
sending, by the launcher, the animation effect start information, the first duration, and the application package name of the first application to the SurfaceFlinger;
after receiving the animation effect start information, the first duration, and the application package name of the first application, determining, by the SurfaceFlinger, the listener of the first application based on the application package name of the first application; and
sending, by the SurfaceFlinger, the animation effect start information and the first duration to the first application by using the listener of the first application.

In this application, the SurfaceFlinger may be used as a bridge for communication between a system desktop (launcher) and the first application. The first application and the SurfaceFlinger may transmit a message to each other by using the listener of the first application, so that the launcher that detects that an animation effect starts or ends transmits, to the first application, a message indicating that the animation effect starts or ends. Therefore, the first application actively sets the task in which the rendering thread applies for the buffer to the wait state.

In another implementation of the first aspect, the method is applied to an electronic device, the electronic device includes a launcher and the first application, and after the receiving a second operation of the user, the method further includes:
determining, by the launcher based on the second operation, to switch from the application interface of the first application to an application interface of the second application; and
sending, by the launcher, animation effect start information to the first application, where after the first application receives the animation effect start information, a task in which a rendering thread of the first application applies for a buffer from the first buffer queue is in a wait state.

In another implementation of the first aspect, after the task in which the rendering thread applies for the buffer from the first buffer queue is set to the wait state, the method further includes:
when the task in which the rendering thread of the first application applies for the buffer from the first buffer queue is in the wait state, the method further includes:
sending, by the launcher, animation effect end information to the first application after detecting that an animation effect ends; and
after the first application receives the animation effect end information, restoring, to an execution state, the task in which the rendering thread applies for the buffer from the first buffer queue.

In this application, because the first duration is estimated switching duration, a moment at which the first duration ends is not completely consistent with a moment at which the animation effect really ends. In this application, another implementation is used, and when the animation effect ends, the animation effect end information is used to trigger the task in which the rendering thread applies for the buffer from the first buffer queue to be restored to the execution state.

In another implementation of the first aspect, the method is applied to an electronic device, the electronic device includes a launcher and a SurfaceFlinger, a data structure of a buffer in the first buffer queue includes a block fence, and after the receiving a second operation of the user, the method further includes:
determining, by the launcher based on the second operation, to switch from the application interface of the first application to an application interface of the second application; and
sending, by the launcher, animation effect start information to the SurfaceFlinger; and
after receiving the animation effect start information, setting, by the SurfaceFlinger, the block fence in the data structure of the buffer in the first buffer queue to a first flag, where when the block fence in the buffer in the first buffer queue is the first flag, a task in which a rendering thread of the first application applies for a buffer from the first buffer queue is in a wait state.

In this application, another manner may alternatively be used to control the GPU no longer to render, in an animation effect period, a layer drawn by using the SurfaceView. For example, the data structure of the buffer in the first buffer queue corresponding to the SurfaceView may be extended, and the block fence is added. It may be set that when the block fence has a specific flag (a flag corresponding to the animation effect period), the task in which the rendering thread applies for the buffer from the first buffer queue is in the wait state. Specifically, the rendering thread may obtain the block fence in the buffer in the first buffer queue, to determine a specific state of the task of applying for the buffer.

In another implementation of the first aspect, when the task in which the rendering thread of the first application applies for the buffer from the first buffer queue is in the wait state, the method further includes:
sending, by the launcher, animation effect end information to the SurfaceFlinger after detecting that an animation effect ends; and
after receiving the animation effect end information, setting, by the SurfaceFlinger, the block fence included in the data structure of the buffer in the first buffer queue to a second flag, where when the block fence in the buffer in the first buffer queue has the second flag, the task in which the rendering thread applies for the buffer from the first buffer queue is restored to an execution state.

In this application, corresponding to the foregoing setting of the block fence to the specific flag in the animation effect period, after the animation effect ends, the flag corresponding to the block fence needs to be restored from the specific flag to the original flag.

In another implementation of the first aspect, the method is applied to an electronic device, the electronic device includes a launcher, a SurfaceFlinger, and the first application, and the method further includes:
determining, by the launcher based on the second operation, to switch from the application interface of the first application to an application interface of the second application;
sending, by the launcher, animation effect start information to the SurfaceFlinger; and
after receiving the animation effect start information, setting, by the SurfaceFlinger, a quantity of buffers in the first buffer queue to 1, and setting an acquisition flag bit of the first buffer queue to a third flag, where when a second buffer in the first buffer queue is not in an idle state, a task in which a rendering thread of the first application applies for the second buffer from the first buffer queue is in a wait state, and the second buffer is a buffer in the first buffer queue when the quantity of buffers in the first buffer queue is 1.

In this application, another manner is further provided to control the GPU no longer to render, in an animation effect period, a layer drawn by using the SurfaceView. For example, in the animation effect period, the SurfaceFlinger may set the quantity of buffers in the first buffer queue to 1, and it is also set that the SurfaceFlinger itself no longer acquires the buffer in the first buffer queue. Therefore, when the quantity of buffers in the first buffer queue is 1 and the buffer is not in the idle state, the rendering thread cannot obtain a buffer in the idle state through application, and naturally does not execute a subsequent step of drawing a layer by using the SurfaceView, and the GPU does not need to render a layer drawn by using the SurfaceView, thereby reducing load of the GPU.

In another implementation of the first aspect, the electronic device further includes a GPU, and after the setting, by the SurfaceFlinger, a quantity of buffers in the first buffer queue to 1, and setting an acquisition flag bit of the first buffer queue to a third flag, the method further includes:
if the second buffer in the first buffer queue is in the idle state, obtaining, by the rendering thread of the first application, the second buffer from the first buffer queue through application;
drawing, by the rendering thread of the first application, a layer in the second buffer by using the SurfaceView, to obtain a seventh layer of the first application;
returning, by the rendering thread of the first application to the first buffer queue, the second buffer that stores the seventh layer, and setting the second buffer to a queued state;
sending, by the rendering thread of the first application, a rendering instruction to the GPU;
rendering, by the GPU, the seventh layer in the first buffer queue after receiving the rendering instruction;
sending, by the GPU, a composition instruction to the SurfaceFlinger after the rendering ends; and
not responding, by the SurfaceFlinger, to the composition instruction when the acquisition flag bit of the first buffer queue is the third flag.

In this application, when the quantity of buffers in the first buffer queue is 1 and the buffer is in the idle state, the rendering thread applies for the buffer in the idle state, and performs once a subsequent step of drawing a layer by using the SurfaceView, and the GPU also renders once a layer drawn by using the SurfaceView once. However, because the SurfaceFlinger no longer acquires a layer drawn by using the SurfaceView, the buffer is maintained in the queued state, so that the rendering thread subsequently cannot obtain the buffer in the idle state, and naturally does not execute a subsequent step of drawing a layer by using the SurfaceView, and the GPU does not need to render a layer drawn by using the SurfaceView, thereby reducing load of the GPU.

In another implementation of the first aspect, the method further includes:
sending, by the launcher, animation effect end information to the SurfaceFlinger after detecting that an animation effect ends; and
after receiving the animation effect end information, setting, by the SurfaceFlinger, the quantity of buffers in the first buffer queue to an initial quantity, and setting the acquisition flag bit of the first buffer queue to a fourth flag; and responding, by the SurfaceFlinger, to the composition instruction when the acquisition flag bit of the first buffer queue is the fourth flag, where the initial quantity is a quantity before the quantity of buffers in the first buffer queue is switched to 1.

In this application, after the animation effect ends, the quantity of buffers in the first buffer queue needs to be restored to the initial quantity, and further, the SurfaceFlinger needs to be set to continue to acquire the buffer in the first buffer queue in response to the composition instruction, to enable the buffer in the first buffer queue to rotate.

According to a second aspect, an electronic device is provided, and includes a processor. The processor is configured to invoke a computer program stored in a storage, to implement the method according to any one of the implementations of the first aspect of this application.

According to a third aspect, a chip is provided, and includes a processor. The processor is coupled to a storage, and the processor executes a computer program stored in the storage, to implement the method according to any one of the implementations of the first aspect of this application.

According to a fourth aspect, a computer-readable storage medium is provided. The computer-readable storage medium stores a computer program. When computer instructions are run on an electronic device, the electronic device is enabled to implement the method according to any one of the implementations of the first aspect of this application.

According to a fifth aspect, an embodiment of this application provides a computer program product. When the computer program product runs on a device, the device is enabled to perform the method according to any one of the implementations of the first aspect of this application.

It may be understood that for beneficial effects of the second aspect to the fifth aspect, refer to the related descriptions in the first aspect. Details are not described herein again.

### BRIEF DESCRIPTION OF DRAWINGS

FIG. 1 is a schematic diagram of a hardware structure of an electronic device according to an embodiment of this application;
FIG. 2A to FIG. 2D are schematic diagrams of an animation effect of switching from a map application to a system desktop according to an embodiment of this application;
FIG. 3A to FIG. 3C are schematic diagrams of an animation effect of switching from a game application to a multi-task interface according to an embodiment of this application;
FIG. 4 is a schematic diagram of an interface drawing, rendering, and composition process according to an embodiment of this application;
FIG. 5 is a schematic diagram of sharing and rotation of a buffer queue according to an embodiment of this application;
FIG. 6 is a schematic diagram of a GPU with an excessively high load according to an embodiment of this application;
FIG. 7 is a schematic diagram of a manner of reducing load of a GPU according to an embodiment of this application;
FIG. 8A and FIG. 8B are an interaction diagram of the manner of reducing load of a GPU shown in FIG. 7 according to an embodiment of this application;
FIG. 9 is a schematic diagram of meta data information of a GraphicBuffer in a buffer queue according to an embodiment of this application;
FIG. 10 is an interaction diagram of a manner of reducing load of a GPU based on the buffer queue shown in FIG. 9 according to an embodiment of this application;
FIG. 11 is an interaction diagram of another manner of reducing load of a GPU according to an embodiment of this application;
FIG. 12 is an interaction diagram of another manner of reducing load of a GPU according to an embodiment of this application;
FIG. 13 is a schematic diagram of differences before using a load reduction manner and after using a load reduction manner according to an embodiment of this application;
FIG. 14 is another schematic diagram of differences before using a load reduction manner and after using a load reduction manner according to an embodiment of this application; and
FIG. 15 is a diagram of comparison between enabling NO-fence latching and not enabling NO-fence latching according to an embodiment of this application.

### DESCRIPTION OF EMBODIMENTS

In the following descriptions, for the purpose of description instead of limitation, specific details such as a specific system structure and a technology are proposed, to provide a thorough understanding of embodiments of this application. However, a person skilled in the art should understand that this application may also be implemented in another embodiment without these specific details.

It should be understood that when being used in the specification and the appended claims of this application, the term "include" indicates presence of a described feature, entirety, step, operation, element, and/or component, but does not rule out presence or addition of one or more other features, entireties, steps, operations, elements, components, and/or sets thereof.

It should be further understood that in embodiments of this application, "one or more" means one, two, or more than two, and "and/or" describes an association relationship between associated objects and indicates that three relationships may exist. For example, "A and/or B" may indicate the following cases: Only A exists, both A and B exist, and only B exists, where A and B may be singular or plural. The character "/" usually indicates an "or" relationship between associated objects.

In addition, in the descriptions of the specification and the appended claims of this application, the terms such as "first", "second", "third", and "fourth" are used only to distinguish between descriptions, and should not be understood as an indication or implication of relative importance.

Referring to "one embodiment", "some embodiments", or the like that is described in the specification of this application means that specific features, structures, or characteristics described with reference to one or more embodiments of this application are included in the one or more embodiments. Therefore, statements such as "in one embodiment", "in some embodiments", or "in some other embodiments" that appear in different parts of this application do not necessarily refer to same embodiments, but mean "one or more but not all embodiments" unless otherwise specifically emphasized in another manner. The terms "include", "comprise", and "have", and variants thereof all mean "include but are not limited to", unless otherwise specifically emphasized in another manner.

Embodiments of this application provide an interface display method. The electronic device may be a tablet computer, a mobile phone, a wearable device, a notebook computer, an ultra-mobile personal computer (ultra-mobile personal computer, UMPC), a netbook, a personal digital assistant (personal digital assistant, PDA), or another electronic device. A specific type of the electronic device is not limited in the embodiments of this application.

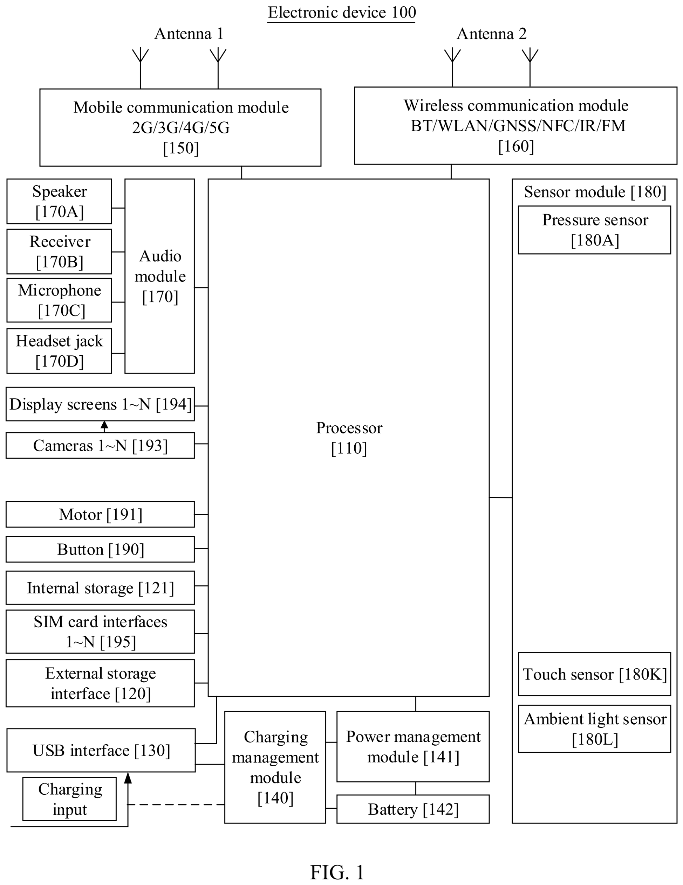

FIG. 1 is a schematic diagram of a structure of an electronic device. The electronic device 100 may include a processor 110, an external storage interface 120, an internal storage 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, a camera 193, a display screen 194, a subscriber identification module (subscriber identification module, SIM) card interface 195, and the like. The sensor module 180 may include a pressure sensor 180A, a touch sensor 180K, an ambient light sensor 180L, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a coprocessor (sensor coprocessor, SCP), a baseband processor, a neural-network processing unit (neural-network processing unit, NPU), and/or the like. Different processing units may be independent devices, or may be integrated into one or more processors. For example, the processor 110 is configured to perform the interface display method in embodiments of this application.

The controller may be a nerve center and a command center of the electronic device 100. The controller may generate an operation control signal based on instruction operation code and a timing signal, to complete control of instruction fetching and instruction execution.

A storage may be further disposed in the processor 110 to store instructions and data. In some embodiments, the storage in the processor 110 is a cache. The storage may store instructions or data recently used or cyclically used by the processor 110. If the processor 110 needs to use the instructions or the data again, the processor 110 may directly invoke the instructions or the data from the storage. This avoids repeated access and reduces waiting time of the processor 110, thereby improving system efficiency.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device.

It may be understood that, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The external storage interface 120 may be configured to connect to an external storage card, for example, a Micro SD card, to expand a storage capability of the electronic device 100. The external storage card communicates with the processor 110 through the external storage interface 120, to implement a data storage function, for example, to store files such as music and videos in the external storage card.

The internal storage 121 may be configured to store computer-executable program code, and the executable program code includes instructions. The processor 110 runs the instructions stored in the internal storage 121, to perform various function applications and data processing of the electronic device 100. The internal storage 121 may include a program storage area and a data storage area. The program storage area may store an operating system and an application required by at least one function (for example, a sound playing function or an image playing function).

In addition, the internal storage 121 may include a high-speed random access memory, and may further include a nonvolatile memory, for example, at least one magnetic disk storage device, a flash memory device, or a universal flash storage (universal flash storage, UFS).

The charging management module 140 is configured to receive a charging input from a charger. The charger may be a wireless charger or a wired charger. In some embodiments of wired charging, the charging management module 140 may receive a charging input from a wired charger through the USB interface 130.

The power management module 141 is configured to connect to the battery 142, the charging management module 140, and the processor 110. The power management module 141 receives an input from the battery 142 and/or the charging management module 140, and supplies power to the processor 110, the internal storage 121, an external storage, the display screen 194, the camera 193, the wireless communication module 160, and the like.

In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution for wireless communication including 2G/3G/4G/5G and the like applied to the electronic device 100. The mobile communication module 150 may include at least one filter, switch, power amplifier, and low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, through the antenna 1, an amplified signal into an electromagnetic wave for radiation.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 may implement an audio function, for example, music playing or sound recording, by using the audio module 170, the speaker 170A, the receiver 170B, the microphone 170C, the headset jack 170D, the application processor, and the like.

The audio module 170 is configured to convert a digital audio signal into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules in the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to listening to a voice message. In some other embodiments, three, four, or more microphones 170C may alternatively be disposed in the electronic device 100, to collect a sound signal, reduce noise, further recognize a sound source, implement a directional sound recording function, and so on. The headset jack 170D is configured to connect to a wired headset. The headset jack 170D may be the USB interface 130, or may be a 3.5 mm open electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device 100 determines intensity of pressure based on a change of the capacitance. When a touch operation is performed on the display screen 194, the electronic device 100 detects intensity of the touch operation by using the pressure sensor 180A. The electronic device 100 may also calculate a touch location based on a detected signal of the pressure sensor 180A.

The touch sensor 180K is also referred to as a "touch panel". The touch sensor 180K may be disposed on the display screen 194. The touch sensor 180K and the display screen 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. A visual output related to the touch operation may be provided by using the display screen 194. In some other embodiments, the touch sensor 180K may alternatively be disposed on a surface of the electronic device 100 at a location different from that of the display screen 194.

The ambient light sensor 180L is configured to sense ambient light brightness. The electronic device 100 may adaptively adjust brightness of the display screen 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket to prevent an accidental touch.

The button 190 includes a power on/off button, a volume button, and the like. The button 190 may be a mechanical button, or may be a touch button. The electronic device 100 may receive a key input and generate a key signal input related to user settings and function control of the electronic device 100.

The motor 191 may generate a vibration prompt. The motor 191 may be configured to provide a vibration prompt for an incoming call, and may also be configured to provide vibration feedback for a touch.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change displayed information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-OLED, a quantum dot light emitting diode (quantum dot light emitting diodes, QLED), or the like. In some embodiments, the electronic device 100 may include one or N display screens 194, where N is a positive integer greater than 1.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The SIM card interface 195 is configured to connect to a SIM card. The SIM card may be inserted into the SIM card interface 195 or removed from the SIM card interface 195 to implement contact with and separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may be further compatible with SIM cards of different types. The SIM card interface 195 may also be compatible with an external storage card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

In the embodiments of this application, a specific structure of an execution body of an interface display method is not specially limited, provided that code in which the interface display method provided in the embodiments of this application is recorded can be run to perform communication based on the interface display method provided in the embodiments of this application. For example, the execution body of the interface display method provided in the embodiments of this application may be a functional module that is in an electronic device and that can invoke a program and execute the program, or may be a communication apparatus, for example, a chip, applied to an electronic device.

In an android system, a plurality of view classes, such as a view and a SurfaceView, are provided to implement layout display of a user interface. The SurfaceView is a sub-class of the view class, may directly obtain image data from a hardware interface such as a memory or DMA, and is a very important drawing view. In view-based window refreshing, an application window of an application needs to be redrawn, and the view performs drawing in a user interface (User Interface, UI) thread. In some relatively complex scenario views, a main thread may be blocked. Therefore, the view is applicable to normal interface layout and interaction. In Surface View-based window refreshing, an application window of an application does not need to be redrawn, and an independent rendering thread is used, so that the Surface View is applicable to a scenario in which complex rendering, frequent updating, or real-time rendering is required, for example, a game scenario, a video scenario, or a map scenario.

In the game scenario, the video scenario, and the map scenario that are listed above, drawing is not performed by using only the SurfaceView, and instead, drawing is also performed by using the SurfaceView while drawing is performed by using the view. Content displayed by an application to a user is a user interface, an activity is a component of the application, and each activity has an application window associated with the activity to display the user interface of the application. The application window may include specific content of a plurality of user interfaces that are constructed by using the view, for example, a button, a text box, and the like in the user interface. The SurfaceView creates a new window disposed behind the application window, which is equivalent to digging a hole in the application window. The SurfaceView is displayed in the hole, and the view is displayed in the application window. Therefore, the view can be displayed above the SurfaceView.

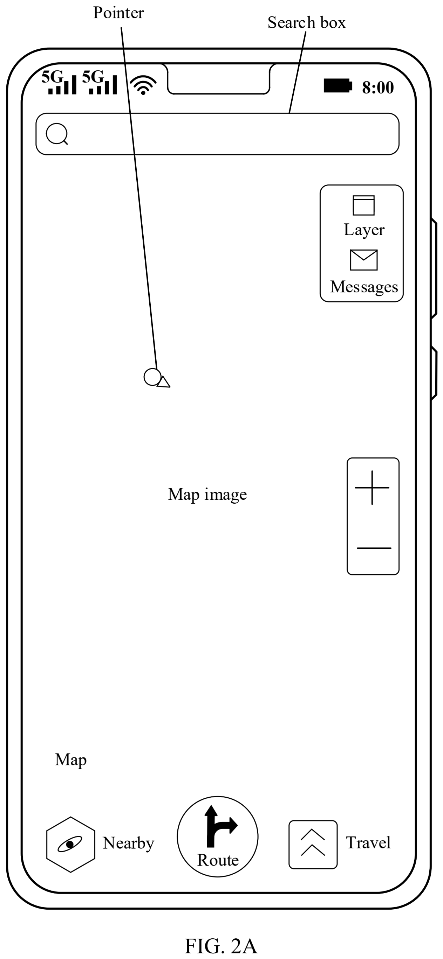

Referring to FIG. 2A, a map application is used as an example. An electronic device displays a user interface of the map application. Some content (for example, a search box, a nearby control, and a travel control) that is in the user interface and that is displayed in an application window is drawn by using the view, and a map image and a pointer that are located behind the application window are drawn by using the SurfaceView.

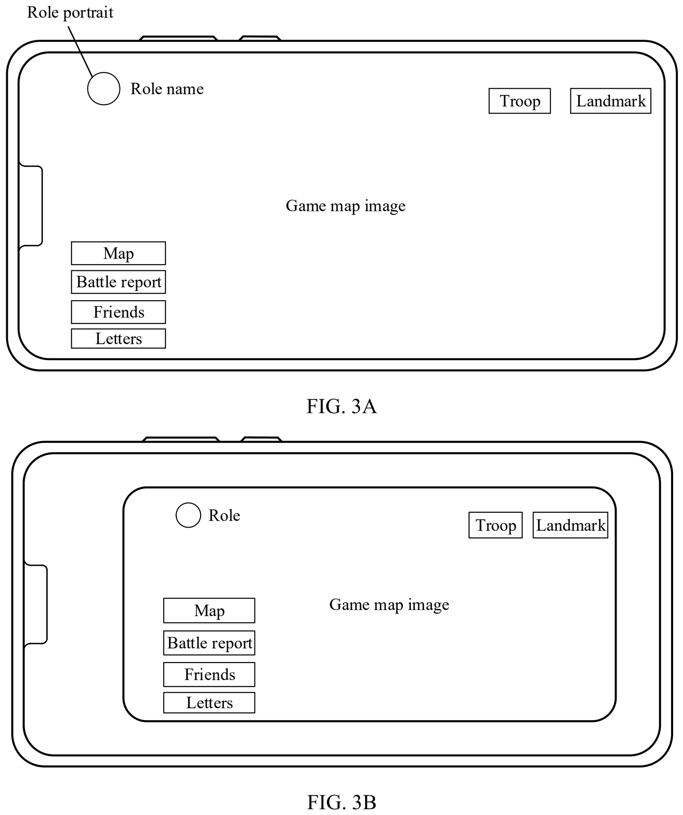

Referring to FIG. 3A, a game application is used as an example. An electronic device displays a user interface of the game application. Some content (for example, a role portrait, a role name, a troop control, and a landmark control) that is in the user interface and that is displayed in an application window is drawn by using the view, and a game map image located behind the application window is drawn by using the Surface View.

In the application shown in FIG. 2A to FIG 2D or FIG. 3A to FIG. 3C, a relatively large quantity of GPU resources are consumed when an image drawn by using the SurfaceView is rendered by using a GPU. Due to a limitation of a chip capability, in some scenarios, a phenomenon of picture stuttering or screen freezing occurs.

The scenario in FIG. 2A to FIG 2D is still used as an example. When the electronic device displays the interface shown in FIG. 2A, a user finger slides upward from a bottom of a display screen (the operation may be used as an example of a second operation that triggers start of an animation effect) to trigger the electronic device to display a system desktop. After detecting the gesture operation that triggers display of the system desktop, the electronic device starts to execute an animation effect of returning to the system desktop. For the animation effect, refer to a process shown in part FIG. 2A to FIG. 2D.

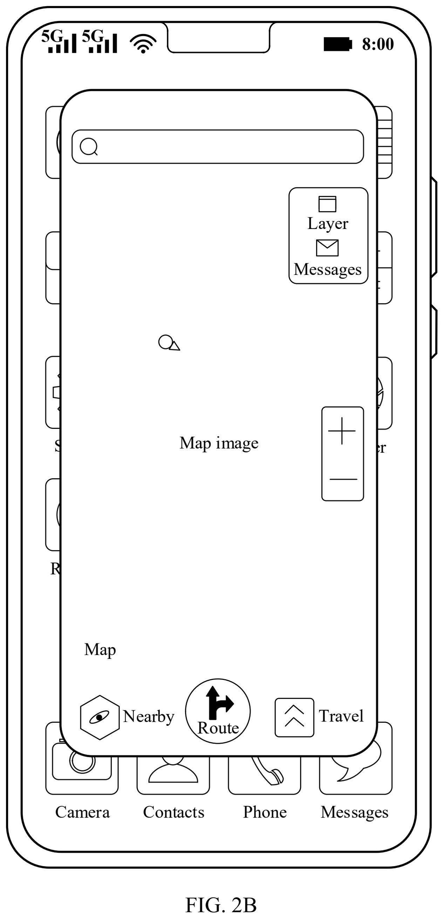

Referring to FIG. 2B, after the animation effect starts, a map interface gradually shrinks. In a process in which the map interface shrinks, an area that is of the system desktop below the map interface and that is not covered by the map interface is gradually displayed.

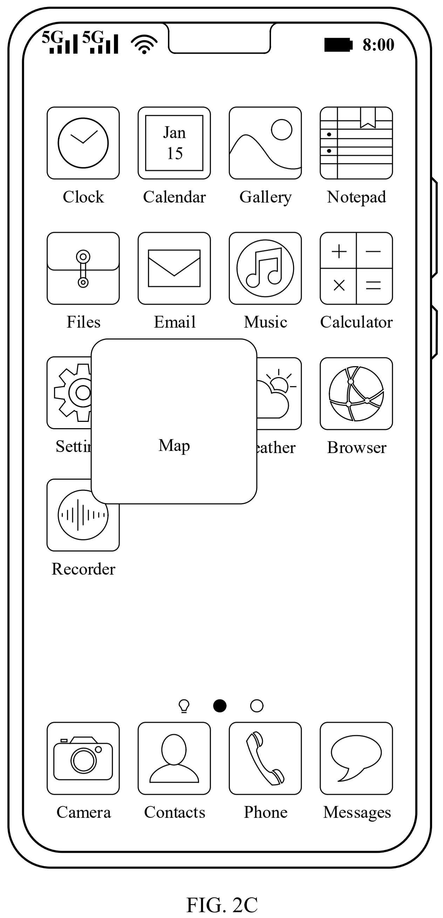

Referring to FIG. 2C, as the map interface becomes increasingly small, the map interface shrinks to a square-shaped card, and increasingly more areas are displayed on the system desktop below the map interface.

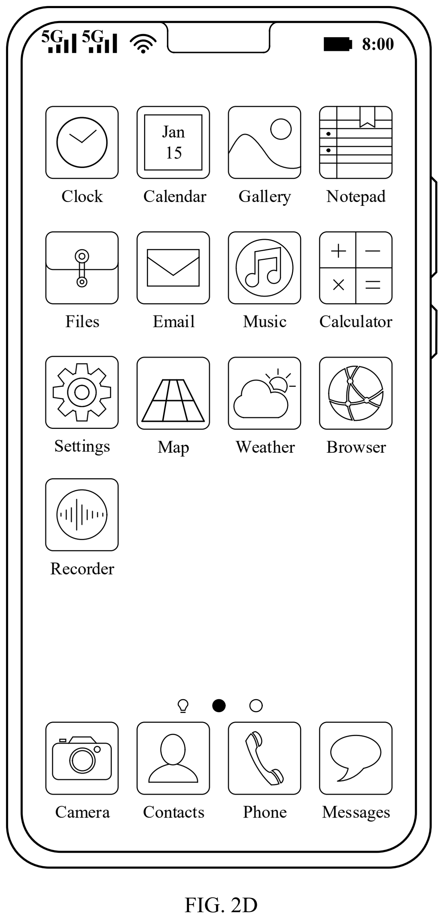

Referring to FIG. 2D, after the map interface disappears, the system desktop is completely displayed, and the animation effect ends.

In the animation effect process, content displayed on the electronic device includes the map interface, the system desktop, a system status bar, and the like. The electronic device continuously performs the following procedure: drawing an image in the map application by using the view and performing subsequent rendering of the image, drawing an image on the system desktop by using the view and performing subsequent rendering of the image, drawing an image in the system status bar by using the view and performing subsequent rendering of the image. In addition, the electronic device also continuously performs the following procedure: drawing an imaged in the map application by using the SurfaceView and performing subsequent rendering of the image. In the electronic device, either an image drawn by using the view or an image drawn by using the Surface needs to be rendered by the GPU, or even needs to be composed by the GPU. Therefore, in the animation effect process, an excessively large quantity of GPU resources are consumed, and a phenomenon of stuttering or screen freezing occurs relatively frequently.

The scenario in FIG. 3A to FIG. 3C is still used as an example. When the electronic device displays the interface shown in FIG. 3A, a user finger slides upward from a bottom of a display screen and then stops (the operation may be used as an example of a second operation that triggers start of an animation effect) to trigger the electronic device to display a multi-task interface. After detecting the gesture operation that triggers display of the multi-task interface, the electronic device starts to execute an animation effect of returning to the multi-task interface. For the animation effect, refer to a process shown in FIG. 3A to FIG. 3C.

Referring to FIG. 3B, after the animation effect starts, a game interface gradually shrinks. In a process in which the game interface shrinks, an area that is of the multi-task interface below the game interface and that is not covered by the game interface is gradually displayed.

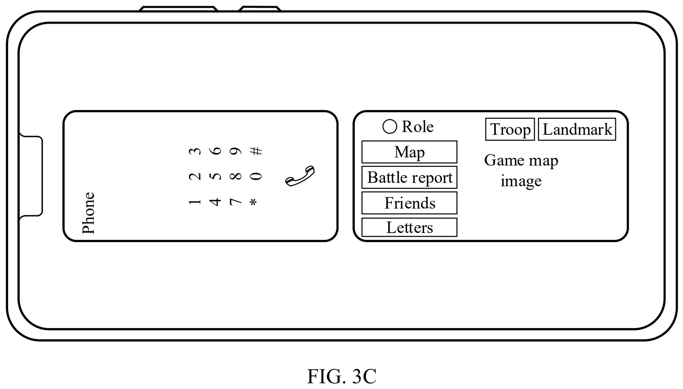

As shown in FIG. 3C, as the game interface becomes increasingly small, other task cards in the multi-task interface are displayed. After the game interface and the other task cards in the multi-task interface are displayed at a fixed size, the animation effect ends.

In the animation effect process, content displayed on the electronic device includes the game interface, the multi-task interface, and the like. The electronic device continuously performs the following procedure: drawing an image in the map application by using the view and performing subsequent rendering of the image, and drawing an image in the multi-task interface by using the view and performing subsequent rendering of the image. In addition, the electronic device also continuously performs the following procedure: drawing an image in the game application by using the SurfaceView and performing subsequent rendering of the image. In the electronic device, either an image drawn by using the view or an image drawn by using the SurfaceView needs to be rendered by the GPU. Therefore, in the animation effect process, an excessively large quantity of GPU resources are consumed, and a phenomenon of stuttering or screen freezing occurs relatively frequently.

In the embodiment shown in FIG. 3A to FIG. 3C, a process of switching from an interface of an application displayed in a landscape mode to the multi-task interface is used as an example. In actual application, a process of switching from an interface of an application displayed in a portrait mode to the multi-task interface is also applicable to the interface display method provided in the embodiments of this application.

In the foregoing embodiment, the map application and the game application before the animation effect starts may be used as examples of a first application before the animation effect starts, and the system desktop or the multi-task interface may be used as an example of an application interface of a second application displayed after the animation effect ends.

A user may trigger, by using a first operation, the electronic device to start the first application, to display an interface of the first application. The first operation may be a tap operation performed on an application icon of the first application on the system desktop.

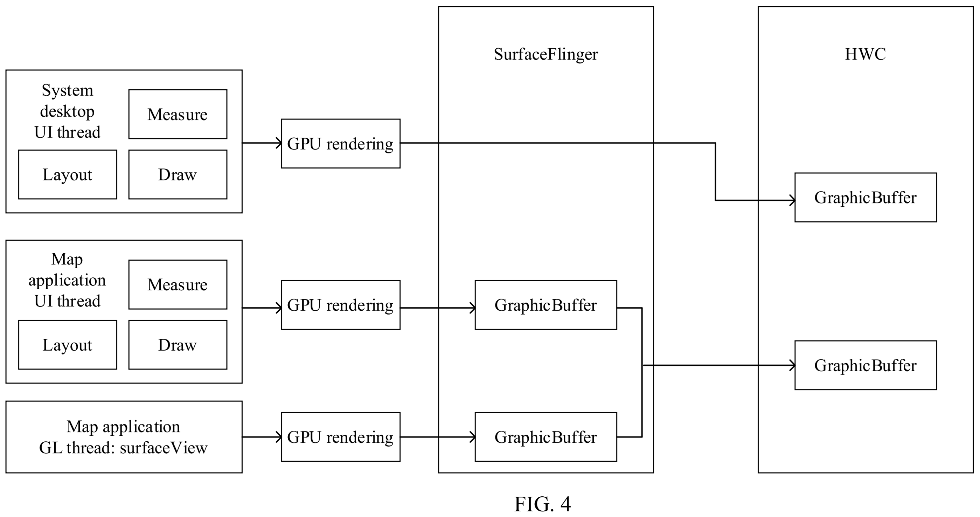

To make a process of refreshing content displayed on the electronic device to be clearer, the following uses FIG. 4 to describes a processing procedure of content displayed on the electronic device in the scenario shown in FIG. 2A to FIG 2D.

Drawing and rendering procedures respectively of images drawn in the map application, the system desktop, and the system status bar by using the view are similar. In this embodiment of this application, an example of performing drawing in the map application and the system desktop by using the view and subsequent rendering is used.

The system desktop has a UI thread, and a process of drawing an image on the system desktop by using the view is performed in the UI thread of the system desktop. The system desktop may initiate a callback drawing task to the UI thread of the system desktop through a scheduleTraversals function of a viewRoot. The UI thread of the system desktop performs measurement (measure), layout (layout), and drawing (draw) operations based on the drawing task to obtain image data 1. The UI thread of the system desktop transmits, by invoking a skia openGL interface through an HWUI, the image data 1 to the GPU for rendering.

The map application has a UI thread, and a process of drawing an image in the map application by using the view is performed in the UI thread of the map application. The map application initiates a callback drawing task to the UI thread of the map application through the scheduleTraversals function of the viewRoot. The UI thread of the map application performs measurement (measure), layout (layout), and drawing (draw) operations based on the drawing task to obtain image data 2. The UI thread of the map application transmits, by invoking the skia openGL interface through the HWUI, the image data 2 to the GPU for rendering.

If the map application needs to perform drawing and rendering by using the Surface View, drawing and rendering by the SurfaceView is performed in a GL thread (used as an example of a rendering thread). The map application draws image data 3 by using the SurfaceView, and transmits, by using the GL thread, the image data 3 to the GPU for rendering.

The GPU executes each received rendering task. In addition, image data drawn in each thread may be stored in a GraphicBuffer in a buffer queue. The GraphicBuffer is configured to transmit image data between an upper-layer application and a SurfaceFlinger. Image data drawn by different applications or by different applications in different manners is stored in different buffer queues.

The scenario shown in FIG. 2A to FIG 2D is used as an example. Image data 1 drawn in the map application by using the view is stored in a buffer queue 1, image data 2 drawn in the map application by using the SurfaceView is stored in a buffer queue 2, image data drawn on the system desktop by using the view is stored in a buffer queue 3, and image data 4 drawn in the system status bar by using the view is stored in a buffer queue 4.

The SurfaceFlinger is responsible for composing the image data in the buffer queues, and each piece of image data has respective displayed information, for example, information such as a location, transparency, a size, and a stacking order (Z-order). The SurfaceFlinger is responsible for composing images based on the displayed information of each piece of image data.

At a SurfaceFlinger level, image data composed by the SurfaceFlinger is denoted as a layer. When performing composition, the SurfaceFlinger first sends a list of layers in each buffer queue to a Hardware Composer (HWC), to ask the HWC how to process these layers. The HWC marks the layers with "overlay" or "GELS composition", and then feeds back the marked layers to the SurfaceFlinger.

The SurfaceFlinger does not process composition of layers marked with "overlay", referring to the processing procedure, in FIG. 4, of image data drawn on the system desktop by using the view.

The SurfaceFlinger composes layers marked with "GELS composition" by using a renderengine (SkiaGLRenderEngine), referring to composition, in FIG. 4, of image data drawn in the map application by using the view and image data drawn in the map application by using the SurfaceFlinger.

The SurfaceFlinger sends, by invoking a setClientTarget, a layer marked with "overlay" and a composed layer marked with "GELS composition" to the HWC for processing.

The HWC obtains a composed image based on a received display parameter of each layer by using lower-layer hardware (for example, a hardware composer), and sends the composed image to a screen driver. The screen driver presents the composed image to a physical screen for refreshing and display.

The foregoing process of refreshing the content displayed on the electronic device is merely an example, and there may be some differences in a specific implementation process.

It may be understood from the example that, in a process of displaying an interface of the map application by the electronic device, the GPU renders a first layer that is of the map application and that is drawn by using the view, and also renders a second layer that is of the map application and that is drawn by using the SurfaceView. A third layer obtained through composition by the SurfaceFlinger includes the first layer and the second layer. Finally, an interface displayed on a display screen is obtained based on the third layer.

As shown in FIG. 4, a GraphicBuffer in a buffer queue (BufferQueue) may store image data. The buffer queue may implement memory sharing and buffer rotation.

On an application side, a window of each application should be denoted as a surface. On a SurfaceFlinger side, the surface corresponds to a layer. When an application needs to perform a drawing operation on the surface, first, an address of the surface in a memory needs to be obtained. The memory is allocated in the SurfaceFlinger. Because the SurfaceFlinger and the application run in different processes, memory sharing and buffer rotation between an application client (the surface) and a SurfaceFlinger server (the layer) may be implemented by using the buffer queue.

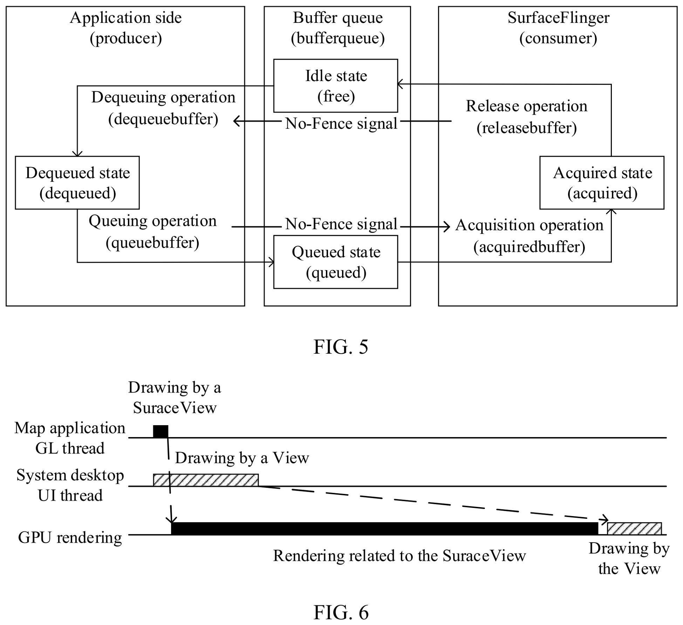

Referring to FIG. 5, buffer rotation is described by using a buffer queue as an example. The GraphicBuffer in the buffer queue may have a plurality of states: an idle state (Free), a dequeued state (dequeued), a quened state (quened), and an acquired state (acquired). The application side (the map application, the system desktop, and the status bar are all applications) may serve as a producer to apply for a GraphicBuffer in the idle state from the buffer queue by using a dequeuing operation (dequeuebuffer), and update the state of the GraphicBuffer from the idle state to the dequeued state.

After applying for the GraphicBuffer, the application side performs measurement, layout, and drawing by using the view, and fills drawn image data into the GraphicBuffer. This process may be denoted as production.

After the production ends, the application side sends, back to the buffer queue by using a queuing operation (queuebuffer), the GraphicBuffer that stores the image data, and updates the state of the GraphicBuffer that stores the image data from the dequeued state to the queued state.

The application side notifies the GPU to render an image in the GraphicBuffer sent back to the buffer queue. After completing the rendering, the GPU may notify the SurfaceFlinger serving as a consumer to acquire a layer in the GraphicBuffer in the queued state.

As a consumer, the SurfaceFlinger may obtain, from the buffer queue by using an acquiring operation (acquiredbuffer), the GraphicBuffer whose state is the queued state, and update the state of the GraphicBuffer from the queued state to the acquired state.

The SurfaceFlinger starts to acquire the layer in the GraphicBuffer, for example, the composition operation performed by the SurfaceFlinger in the embodiment shown in FIG. 4. After completing the acquisition, the SurfaceFlinger releases the GraphicBuffer by using a release operation (releasebuffer), and updates the state of the GraphicBuffer from the acquired state to the idle state.

In the foregoing buffer rotation process, data synchronization may be ensured by using a fence mechanism.

The application side, as a producer, cannot directly apply for the GraphicBuffer in the idle state, and further needs to wait for a signal (NO-fence signal). After acquiring a batch of synchronous layers, the SurfaceFlinger may send the NO-fence signal to each application (the map application, the system desktop, and the status bar). Each application can obtain the GraphicBuffer in the idle state through application only after receiving the NO-fence signal. After obtaining the GraphicBuffer in the idle state through application, the application side fills the image data into the GraphicBuffer as a producer, sends the GraphicBuffer filled with the image data to the buffer queue, and also notifies the GPU to perform rendering. After the GPU completes the rendering, each application sends the NO-fence signal back to the SurfaceFlinger.

Similarly, the SurfaceFlinger cannot directly acquire the GraphicBuffer filled with the image data in the buffer queue, and also needs to wait for each NO-fence signal. The SurfaceFlinger can obtain, only after receiving each NO-fence signal, the GraphicBuffer whose state is the queued state from the buffer queue. In this way, data synchronization can be ensured.

After releasing the GraphicBuffer, the SurfaceFlinger updates the state of the GraphicBuffer from the acquired state to the idle state, and also sends a NO-fence signal. The NO-fence signal is transmitted to each application side, so that the application side can continue to perform a next round of rotation.

Generally, when sending the GraphicBuffer filled with the image data back to the buffer queue, the application side notifies the GPU to perform rendering. However, if the GPU has not finished rendering a previous image task, the application side enters a blocking queue, waits for completion of rendering by the GPU, and then sends the GraphicBuffer filled with the image data back to the buffer queue and notifies the GPU to perform rendering.

For a complex scenario (for example, the scenario shown in FIG. 2A to FIG 2D or FIG. 3A to FIG. 3C), when the GPU performs high-intensity rendering on image data drawn by using the SurfaceView, a relatively large quantity of GPU resources are usually occupied. For example, it takes a relatively long time for the GPU to process rendering of the image data drawn by using the SurfaceView, which causes another rendering task (rendering of an image drawn in the map application by using the view, rendering of an image drawn on the system desktop by using the view, or rendering of an image drawn in the status bar by using the view) to be always in a wait state. The GPU cannot perform rendering at a predetermined frame rate, and subsequent composition and sending for display cannot be performed at a frame rate. As a result, stuttering or screen freezing occurs in the scenario shown in FIG. 2A to FIG. 2D or FIG. 3A to FIG. 3C.

Referring to FIG. 6, after the GL thread of the map application ends drawing, the GPU renders an image drawn by using the SurfaceView in the map application. Because the rendering task takes a relatively long time, after an image is drawn on the system desktop by using the view, the GPU cannot immediately render the image drawn in the system desktop by using the view, but needs to wait until the GPU ends a previous rendering task (rendering corresponding to the SurfaceView), to render the image drawn in the system desktop by using the view. If this waiting process takes a relatively long time, for example, exceeding a Vsync signal period or even longer, stuttering or screen freezing may occur in the scenario shown in FIG. 2A to FIG. 2D or FIG. 3A to FIG. 3C.

Currently, in the scenario shown in FIG. 2A to FIG. 2D or FIG. 3A to FIG. 3C, drawing and rendering in each application (the map application, the system desktop, the status bar, and the like) by using the view is relatively associated with whether an animation effect perceived by a user is fluent, and drawing and rendering by using the SurfaceView is not strongly associated with whether the animation effect perceived by the user is fluent. This is because the foregoing animation effect process is a process of switching from the map application to the system desktop, and the user does not care about a change of the map image in the interface of the map application, and care more about a change of content displayed on the electronic device, for example, a size and a location of the interface of the map application, and content displayed on the system desktop. Therefore, in this embodiment of this application, in the scenario shown in FIG. 2A to FIG. 2D or FIG. 3A to FIG. 3C, load of the GPU may be reduced in a manner of suspending rendering of an image corresponding to the SurfaceView, to reduce a probability that the GPU is blocked, thereby reducing phenomena of stuttering or screen freezing in the animation effect process.

In specific implementation, the manner of suspending rendering of an image corresponding to the SurfaceView to reduce the load of the GPU may include the following:
(1) A quantity of GraphicBuffers in a buffer queue corresponding to the SurfaceView is set to 1, and it is also set that the SurfaceFlinger no longer acquires a GraphicBuffer in the buffer queue corresponding to the SurfaceView. In this manner, after one GraphicBuffer in the buffer queue corresponding to the Surface View is applied for and returned to the queue, because the SurfaceFlinger no longer acquires the GraphicBuffer, there is no GraphicBuffer in the idle state in the buffer queue corresponding to the SurfaceView, and subsequent application for the GraphicBuffer by an application fails. Correspondingly, the application cannot obtain a GraphicBuffer in the idle state through application, and subsequent drawing does not exist naturally. As a result, the GPU also does not need to perform subsequent rendering related to the SurfaceView, and the load of the GPU is greatly reduced. The buffer queue corresponding to the SurfaceView may be denoted as a first buffer queue.
(2) Specific information (a block fence) is added through extended design to the GraphicBuffer in the buffer queue corresponding to the SurfaceView. When rendering of an image based on the SurfaceView is no longer performed in an animation effect period, the specific information is set to a mark, and when rendering of an image based on the SurfaceView is performed in a non-animation effect period, the specific information is set to another mark. The following also needs to be set: An application applies for a GraphicBuffer in the idle state only when obtaining a corresponding mark (the mark in the non-animation effect period). Otherwise, the application enters a wait state and wait until obtaining the corresponding mark (the mark in the non-animation effect period). In the animation effect period, the application side is always in the wait state, and cannot apply for a GraphicBuffer in the idle state in the buffer queue corresponding to the SurfaceView. Naturally, subsequent drawing and rendering of the SurfaceView by the GPU are no longer performed, and the load of the GPU is greatly reduced.
(3) The system desktop may detect start of an animation effect and end of the animation effect. Therefore, the system desktop sends animation effect start information or animation effect end information to the SurfaceFlinger. After receiving the animation effect start information, the SurfaceFlinger transmits the animation effect start information to an application that is drawn by using the SurfaceView, so that after the animation effect starts, an operation of applying, by the application, for a GraphicBuffer in the buffer queue corresponding to the SurfaceView is an invalid operation, or the application task may be continued, but the application task enters the wait state. After the animation effect end information is transmitted to the application side, the application side continues to restore the operation of applying for the GraphicBuffer in the buffer queue corresponding to the Surface View to a valid operation, or ends the wait state. In the animation effect period, the application side cannot successfully obtain (the invalid operation or the wait state), through application, the GraphicBuffer in the idle state in the buffer queue corresponding to the SurfaceView. Naturally, subsequent rendering related to the SurfaceView is no longer performed, and the load of the GPU is greatly reduced.

Certainly, the foregoing three enumerated manners of reducing the load of the GPU are described by using an example in which the animation effect start information or the animation effect end information is transmitted. In actual application, the animation effect start information and animation effect duration may alternatively be transmitted. In this way, some setting parameters may be restored to values in the non-animation effect period in a proper actual situation without transmitting the animation effect end message.

It may be understood from the foregoing three manners that, during switching from the map application to the system desktop, when the electronic device displays an interface in the switching process, the GPU renders a fourth layer drawn in the map application by using the view, and also renders a fifth layer drawn in the system desktop by using the view. A sixth layer obtained through composition by the SurfaceFlinger includes the fourth layer and the fifth layer, and finally, an interface displayed on the display screen is obtained based on the sixth layer.

The following separately describes the foregoing manners of reducing the load of the GPU.

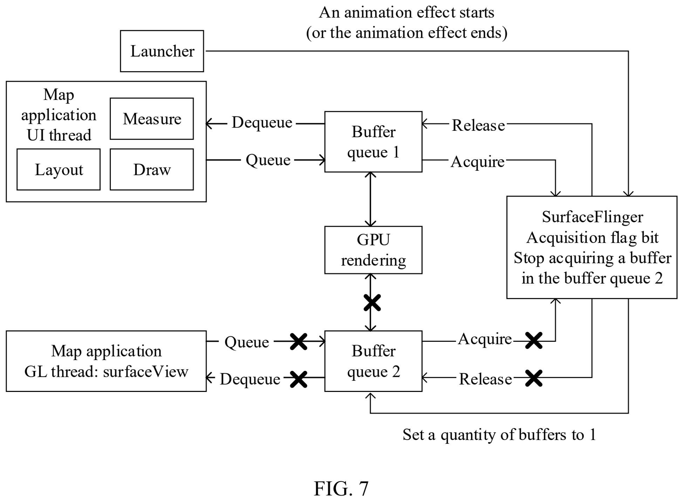

FIG. 7 shows a manner of reducing load of a GPU according to an embodiment of this application. The manner of reducing the load of the GPU is described by using the scenario shown in FIG. 2A to FIG. 2D as an example. The manner corresponds to the foregoing manner (1) of reducing the load.

When the electronic device displays the interface of the map application, interface refreshing of the map application includes at least two procedures:
Procedure 1: Before performing measurement, layout, and drawing operations of the map application that are performed by using the view, the UI thread of the map application first applies for a GraphicBuffer in the idle state from the buffer queue 1. The UI thread performs production on the applied GraphicBuffer to obtain a GraphicBuffer filled with image data. The UI thread sends the GraphicBuffer filled with image data to the buffer queue 1, and notifies the GPU to render the GraphicBuffer filled with image data. After completing the rendering, the GPU notifies the SurfaceFlinger to acquire the GraphicBuffer. After acquiring the GraphicBuffer in the buffer queue 1 to perform layer composition, the SurfaceFlinger releases the acquired GraphicBuffer.
   Certainly, in actual application, another application (for example, the system desktop or the status bar) may perform the foregoing procedure.
Procedure 2: The GL thread of the map application first applies for a GraphicBuffer in the idle state from the buffer queue 2. The GL thread performs production, and obtains, after the production ends, a GraphicBuffer filled with image data. The GL thread sends the GraphicBuffer filled with the image data to the buffer queue 2, and notifies the GPU to render the GraphicBuffer filled with the image data. After completing the rendering, the GPU notifies the SurfaceFlinger to acquire the GraphicBuffer. After acquiring the GraphicBuffer in the buffer queue 2 to perform layer composition, the SurfaceFlinger releases the acquired GraphicBuffer.

In the process in which the electronic device displays the interface of the map application, the user performs a gesture operation on the display screen of the electronic device, to trigger the electronic device to return to the system desktop.

The system desktop (launcher) in the electronic device may detect the gesture operation, determine start of the animation effect based on the gesture operation, and send the animation effect start information to the SurfaceFlinger.

After receiving the animation effect start information, the SurfaceFlinger sets a quantity of buffers in the buffer queue 2 in the procedure 2 to 1, and sets an acquisition flag bit to 0, where 0 indicates that the SurfaceFlinger does not have a capability of acquiring a GraphicBuffer in the buffer queue 2.

The foregoing settings are not related to the procedure 1, and therefore, the procedure 1 continues to be cyclically performed. The foregoing settings are related to the procedure 2, and change the procedure 2.

The procedure 2 after the foregoing settings take effect is as follows:

The GL thread first applies for a GraphicBuffer in the idle state from the buffer queue 2. Because the quantity of GraphicBuffers in the buffer queue 2 is 1, if a state of the GraphicBuffer is the idle state, the application succeeds.

After successfully obtaining the GraphicBuffer through application, the GL thread starts production, sends a GraphicBuffer that is obtained through the production and that is filled with image data to the buffer queue 2, and notifies the GPU to render the GraphicBuffer filled with the image data. After completing the rendering, the GPU notifies the SurfaceFlinger to acquire the GraphicBuffer. Because the acquisition flag bit is set to 0, the SurfaceFlinger no longer acquires a GraphicBuffer in the buffer queue 2 even after receiving the notification message (for example, a NO-fence signal), and the GraphicBuffer in the buffer queue 2 remains in the queued state.

When the map application uses the GL thread to perform drawing performed by using the SurfaceView, the GL thread fails to apply for the GraphicBuffer in the idle state from the buffer queue 2.

If the GL thread cannot successfully obtain the GraphicBuffer in the idle state through application, subsequent drawing by using the SurfaceView is no longer performed. Correspondingly, the GPU does not need to perform rendering of an image that is drawn by using the Surface View. In this way, the load of the GPU is naturally reduced.

Certainly, the system desktop (launcher) may also detect end of the animation effect. After detecting that the animation effect ends, the system desktop (launcher) sends the animation effect end information to the SurfaceFlinger. The SurfaceFlinger further needs to restore a quantity of GraphicBuffers in the buffer queue 2 to an initial state (for example, if an original quantity is n, the quantity is set to n), and restore the acquisition flag bit to an initial state (for example, if an original acquisition flag bit is 1, the acquisition flag bit is set to 1). When the acquisition flag bit is 1, the SurfaceFlinger has the capability of acquiring a GraphicBuffer in the buffer queue 2.

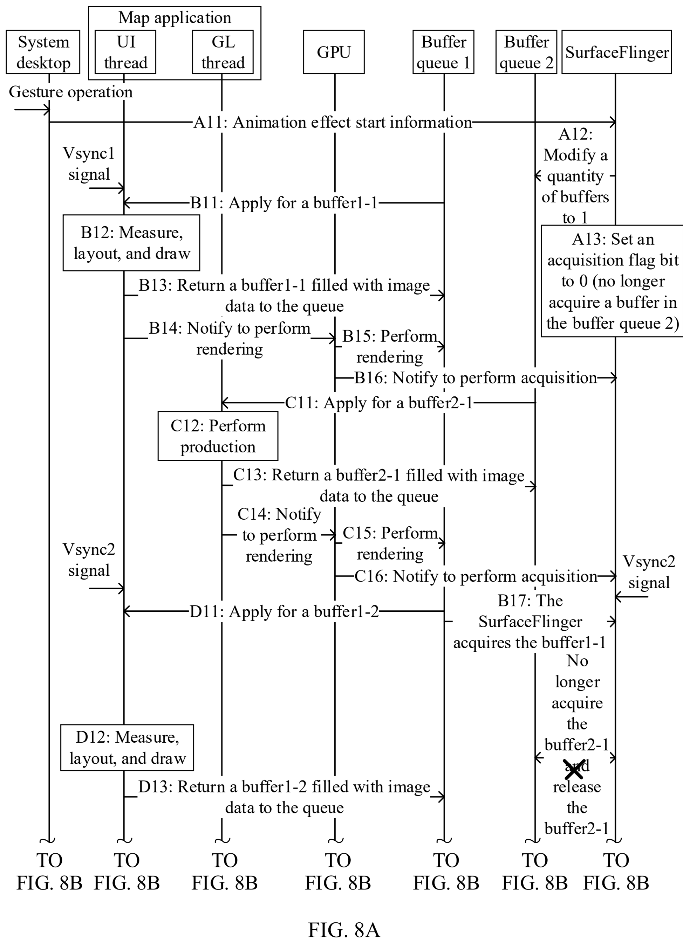

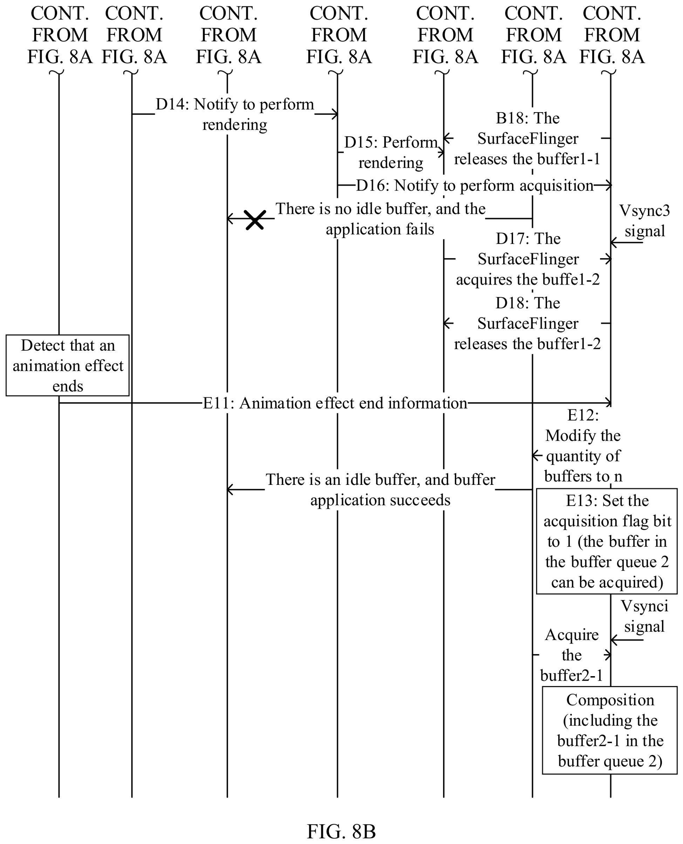

To better understand the foregoing load reduction process, the foregoing process of reducing the load of the GPU is described by using a timing diagram shown in FIG. 8A and FIG. 8B.

A11: After detecting a gesture operation, the system desktop (launcher) determines start of the animation effect based on the gesture operation, and sends the animation effect start information to the SurfaceFlinger.

A12: After receiving the animation effect start information, the SurfaceFlinger modifies the quantity of GraphicBuffers in the buffer queue 2 to 1.

The buffer queue 2 is a buffer queue in which image data that is of the map application and that is drawn by using the SurfaceView.

A13: After receiving the animation effect start information, the SurfaceFlinger sets the acquisition flag bit to 0 (as an example of a third flag), where 0 indicates that the SurfaceFlinger does not have the capability of acquiring a GraphicBuffer in the buffer queue 2. Even if a condition for acquiring the GraphicBuffer in buffer queue 2 by the SurfaceFlinger is met, the SurfaceFlinger no longer acquires the GraphicBuffer in the buffer queue 2. In other words, when composing layers in buffer queues, the SurfaceFlinger no longer composes layers in the buffer queue 2, but composes layers in other buffer queues (a buffer queue in which an image drawn in the map application by using the view is located, a buffer queue in which an image drawn in the system desktop by using the view is located, and a buffer queue in which an image drawn in the status bar by using the view is located).

There is no strict sequence between Step A12 and step A13.

After the animation effect starts, the map application, the system desktop, and the status bar all execute a corresponding rendering task based on a Vsync signal. In this embodiment of this application, only an example in which the map application executes a view-based rendering task based on the Vsync signal is used to describe a difference between a drawing and rendering procedure of an image that is drawn by using the View and a drawing and rendering procedure of an image that is drawn by using the SurfaceView, where the drawing and rendering procedures are after the animation effect starts.

B11: After receiving a Vsync1 signal, the UI thread of the map application applies for a GraphicBuffer1-1 in the idle state from the buffer queue 1.

The UI thread of the map application may execute a subsequent drawing task based on the Vsync signal, and there is no strict sequence between time at which the UI thread executes the drawing task based on the Vsync signal each time and time at which the animation effect starts. Correspondingly, there is also no strict sequence between a step after step A11 and a step after step B11.

B12: The UI thread of the map application performs production work such as measurement, layout, and drawing based on the applied GraphicBuffer1-1, to obtain a GraphicBuffer 1-1 filled with image data.

B13: The UI thread of the map application sends the GraphicBufferl-1 filled with the image data back to the buffer queue 1.

B14: After sending the GraphicBuffer1-1 back to the buffer queue 1, the UI thread of the map application notifies the GPU to perform rendering.

B15: The GPU receives information notifying to perform rendering, and starts to render an image in the GraphicBuffer 1-1.

B16: After the rendering ends, the GPU notifies the SurfaceFlinger to acquire the GraphicBuffer1-1.

The SurfaceFlinger waits for a Vsync signal after receiving information notifying to perform acquisition.

When a procedure of drawing and rendering an image that is of the map application (the system desktop, the status bar, or the like) and that is drawn by using the View is performed, a procedure of drawing and rendering an image that is of the system desktop and that is drawn by using the View and a procedure of drawing and rendering an image that is of the status bar and that is drawn by using the View (not shown in the figure) are also performed, and drawing and rendering of an image that is of the map application and that is drawn by using the SurfaceView are also performed, for example, step C11 to step C16 shown in the figure.

It should be noted that, for clarity of illustration, although the figure first describes drawing and rendering of the image that is of the map application and that is drawn by using the View, and then describes drawing and rendering of the image that is of the map application and that is drawn by using the Surface View, in actual application, there is no strict sequence between drawing and rendering by using the view and drawing and rendering by using by using the Surface View.

C11: After receiving a drawing instruction delivered by the map application, the GL thread of the map application applies for a GraphicBuffer2-1 from the buffer queue 2.

C12: The GL thread of the map application performs production based on the applied GraphicBuffer2 to obtain a GraphicBuffer2-1 filled with image data.

C13: The GL thread of the map application sends the GraphicBuffer2-1 filled with the image data back to the buffer queue 2.

C14: After sending the GraphicBuffer2-1 back to the buffer queue 2, the GL thread of the map application notifies the GPU to perform rendering.

C15: The GPU receives information notifying to perform rendering, and starts to render an image in the GraphicBuffer2-1.

C16: After the rendering ends, the GPU notifies the SurfaceFlinger to acquire the GraphicBuffer2-1.

After receiving information notifying to perform acquisition, the SurfaceFlinger does not have a capability of acquiring the GraphicBuffer2-1 in the buffer queue 2 because the acquisition flag is set to 0.

B17: After receiving a Vsync2 signal, the SurfaceFlinger starts to acquire a GraphicBuffer from the buffer queue 1 of the map application and GraphicBuffers from buffer queues of other applications (the system desktop, the status bar, and the like), to obtain a composed image.

B18: After obtaining the composed image, the SurfaceFlinger releases the GraphicBuffer1-1 and the GraphicBuffers in the buffer queues of the other applications (the system desktop, the status bar, and the like).

In addition, it should be noted that when the SurfaceFlinger receives the Vsync2 signal, the map application also receives the Vsync2 signal. Therefore, the UI thread of the map application performs step D11 to step D16.

For this process, refer to step B11 to step B16, except that a GraphicBuffer applied for from the buffer queue 1 is a GraphicBuffer1-2. In this process, because there are a plurality of GraphicBuffers in the buffer queue 1, even if the GraphicBuffer1-1 is not released, the GraphicBuffer1-2 can still be obtained to produce a next frame of image.

However, when the GL thread applies for a GraphicBuffer in the idle state from the buffer queue 2 after receiving a drawing task of the application, because the SurfaceFlinger does not acquire the GraphicBuffer2-1, and the GraphicBuffer2-1 is the only GraphicBuffer (that is, in the queued state and is not in the idle state) in the buffer queue 2, the GL thread of the map application cannot successfully obtain the GraphicBuffer through application. In the animation effect period, the GL thread cannot successfully obtain the GraphicBuffer through application. Naturally, the GPU does not perform rendering of an image that is drawn by using the SurfaceView, thereby reducing load of the GPU.

D17: After receiving a Vsync3 signal, the SurfaceFlinger acquires the GraphicBuffer1-2 in the buffer queue 1 of the map application and GraphicBuffers in buffer queues of other applications (for example, the system desktop and the status bar) to obtain a composed image.

D18: The SurfaceFlinger releases the GraphicBuffer1-2 in the buffer queue 1 of the map application and the GraphicBuffers in the buffer queues of the other applications.

In the animation effect period, the GPU no longer performs rendering of an image drawn by using the SurfaceView, load of the GPU is greatly reduced, and a rendering task of an image drawn by another application or thread is not blocked. The SurfaceFlinger can compose other images and send, for display, a composed image based on a Vsync signal period. Therefore, phenomena of stuttering or screen freezing are reduced. From a perspective of the user, the map interface gradually becomes smaller, and shielded content of the system desktop gradually decreases, and the system status bar is also updated in real time based on an actual situation. From the perspective of the user, the user does not care about a change of the map image in the animation effect period of returning the map application to a background and displaying the system desktop. Therefore, user experience is not reduced.

After the animation effect ends, the SurfaceFlinger may modify the quantity of GraphicBuffers in the buffer queue 2, and restore the acquisition flag bit of the SurfaceFlinger to an initial state.

E11: The system desktop (Launcher) sends the animation effect end information to the SurfaceFlinger after detecting that the animation effect ends.

E12: After receiving the animation effect end information, the SurfaceFlinger modifies the quantity of GraphicBuffers in the buffer queue 2 to n (the initial state).

E13: After receiving the animation effect end information, the SurfaceFlinger sets the acquisition flag bit to 1 (the initial state, used as an example of a fourth flag).

Similarly, an execution sequence of step E12 and step E13 is not limited.

After step E12 takes effect, because time at which the application really returns to the background and stops is later than end time of the animation effect, the GL thread of the map application may further receive the drawing task delivered by the map application, or certainly may not receive the drawing task delivered by the map application. If the GL thread of the map application receives the drawing task delivered by the application, the GL thread may apply for a GraphicBuffer in the idle state from the buffer queue 2 to continue to perform a subsequent operation. If the SurfaceFlinger receives a Vsynci (i is greater than 3) signal, the SurfaceFlinger also starts to acquire a GraphicBuffer in the buffer queue 1 of the map application, GraphicBuffers in buffer queues of other applications, and the GraphicBuffer2-1 in the buffer queue 2 of the map application, to implement rotation of the GraphicBuffer in the buffer queue 2.

An embodiment of this application further provides another manner of reducing load of a GPU. The manner of reducing the load of the GPU is described by using the scenario shown in FIG. 2A to FIG. 2D as an example. The manner corresponds to the foregoing manner (2) of reducing the load.

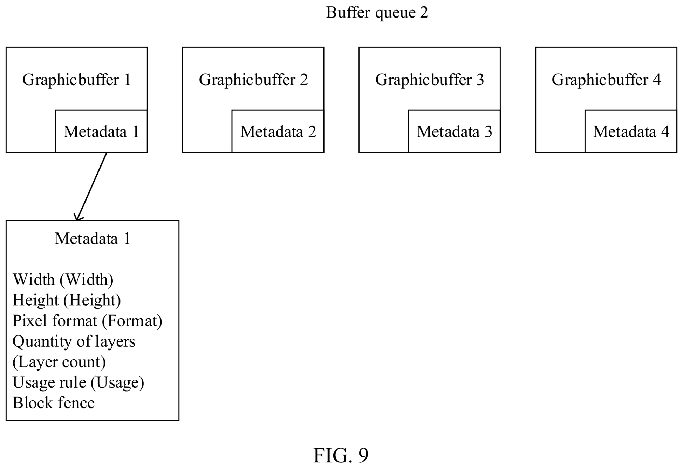

FIG. 9 shows a specific structure of a GraphicBuffer in the buffer queue 2 according to an embodiment of this application. Other information may be stored in a memory structure of the GraphicBuffer.

An example in which four GraphicBuffers exist in the buffer queue 2 is used. Other information of each GraphicBuffer is stored in respective meta Data.

Each piece of meta Date stores a width (width) of an image, a height (height) of the image, a pixel format (format) of the image, a layer count (a quantity of layers), and an image usage (usage) rule.

In this embodiment of this application, one block fence may be added to the meta Data of each GraphicBuffer through extended design. The block fence is set to -1 in the non-animation effect period, and the block fence is set to 1 (as an example of the first flag) in the animation effect period. Certainly, a parameter of the block fence is only used as an example. In actual application, another setting may be performed based on an actual situation.

Therefore, when applying for a GraphicBuffer in the idle state from the buffer queue 2, the application side needs to additionally obtain the block fence of the GraphicBuffer.

If the obtained block fence is 1, the application side waits until the animation effect ends and the block fence in the buffer queue 2 is set to -1 (as an example of the second flag), and then can obtain the block fence of -1. In specific implementation, the block fence may be transmitted together with a NO-fence signal. After waiting for the NO-fence signal, the application side checks a value of the block fence sent together, and determine, based on the value of the block fence, whether to apply for a buffer.

After obtaining the block fence of -1, the application side continues to apply for the GraphicBuffer in the idle state from the buffer queue 2.

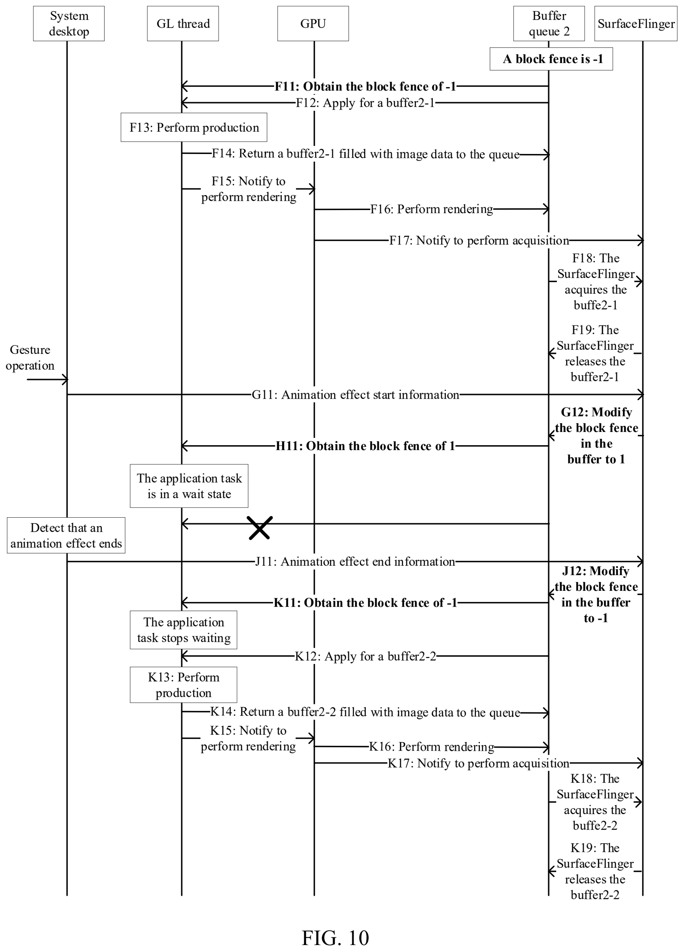

FIG. 10 shows a timing diagram of a method for reducing load of a GPU based on a block fence according to an embodiment of this application. In this embodiment, an operation performed by a UI thread of each application is no longer described, and the operation performed by the UI thread is not affected by whether an animation effect starts or ends. For details, refer to the operation performed by the UI thread of the map application shown in FIG. 8A and FIG. 8B. In the non-animation effect period, the block fence of the GraphicBuffer in the buffer queue 2 is -1.

F11: The GL thread of the map application obtains a block fence of -1 from the buffer queue 2.

F12: After obtaining the block fence of -1, the GL thread of the map application applies for a GraphicBuffer2-1 in the idle state from the buffer queue 2.

F13: The GL thread of the map application starts production after obtaining the GraphicBuffer2-1 through application, to obtain a GraphicBuffer2-1 filled with image data.

F14: The GL thread of the map application sends the GraphicBuffer2-1 filled with the image data back to the buffer queue 2.

F15: After sending the GraphicBuffer2-1 back to the buffer queue 2, the GL thread of the map application notifies the GPU to perform rendering.

F16: After receiving information notifying to perform rendering, the GPU starts to render the image data in the GraphicBuffer2-1.

F17: After the rendering ends, the GPU notifies the SurfaceFlinger to perform acquisition.

F18: The SurfaceFlinger acquires the GraphicBuffer2-1 in the buffer queue 2 and GraphicBuffers in buffer queues of other applications based on a Vsync signal, to obtain a composed image.

F19: The SurfaceFlinger releases the GraphicBuffer2-1 and the GraphicBuffers of the other applications.

The foregoing procedure is a procedure in the non-animation effect period. The following describes a procedure in the animation effect period.

G11: After detecting a gesture operation, the system desktop (launcher) determines start of the animation effect based on the gesture operation, and sends the animation effect start information to the SurfaceFlinger.

G12: After receiving the animation effect start information, the SurfaceFlinger modifies a quantity of block fences in the GraphicBuffer in the buffer queue 2 to 1.

H11: The GL thread of the map application obtains, based on a task of the map application, a block fence of 1 in the GraphicBuffer in the idle state in the buffer queue 2.

Because the value of the block fence obtained by the GL thread of the map application is 1, and the application task enters the wait state, subsequent drawing of an image that is drawn by using the SurfaceView is stopped, and the GPU no longer performs rendering of the image that is drawn by using the SurfaceView. Therefore, the load of the GPU can be reduced.

After the system desktop detects that the animation effect ends, the block fence in the GraphicBuffer in the buffer queue 2 needs to be set to -1.

J11: The system desktop sends the animation effect end information to the SurfaceFlinger after detecting that the animation effect ends.

J12: After receiving the animation effect end information, the SurfaceFlinger sets the block fence in the GraphicBuffer in the buffer queue 2 to -1.

After the value of the block fence in the GraphicBuffer in the buffer queue 2 is set to -1, if the GL thread receives the drawing task delivered by the map application, the GL thread performs a subsequent action.

K11: The GL thread obtains the block fence of -1 in the GraphicBuffer from the buffer queue 2 based on the task of the map application.

After obtaining the block fence of -1, the GL thread restores the application task that is previously in the wait state.

K12: The GL thread obtains a GraphicBuffer2-2 in the idle state from the buffer queue 2.

K13: The GL thread performs production to obtain a GraphicBuffer2-2 filled with image data.

K14: The GL thread sends the GraphicBuffer2-2 filled with the image data back to the buffer queue 2.

K15: After sending the GraphicBuffer2-2 back to the buffer queue 2, the GL thread notifies the GPU of perform rendering.

K16: After receiving information notifying to perform rendering, the GPU starts to render the image data in the GraphicBuffer2-2.

K17: After the rendering ends, the GPU notifies the SurfaceFlinger to acquire the GraphicBuffer2-2.

K18: The SurfaceFlinger acquires the GraphicBuffer2-2 in the buffer queue 2 and buffers in the buffer queue 1 of the map application and buffer queues of other applications, to obtain a composed image.

K19: After the acquisition, the SurfaceFlinger releases the GraphicBuffer2-2 and the GraphicBuffers in the buffer queue 1 of the map application the buffer queues of the other applications.

As described above, the GL thread applies, only when the GL thread obtains the block fence with a value of -1, for a GraphicBuffer from the buffer queue 2. Otherwise, the GL thread keeps in the wait state, and no longer applies for the GraphicBuffer from the buffer queue 2. In this way, the application side does not apply for the GraphicBuffer in the buffer queue 2 based on the SurfaceView, and naturally does not perform production, so that subsequently, the GPU does not need to perform rendering related to the SurfaceView. Therefore, the load of the GPU can be reduced, and phenomena of stuttering or screen freezing can be reduced.

An embodiment of this application further provides another manner of reducing load of a GPU. The manner of reducing the load of the GPU is described by using the scenario shown in FIG. 2A to FIG. 2D as an example. The manner corresponds to the foregoing manner (3) of reducing the load.

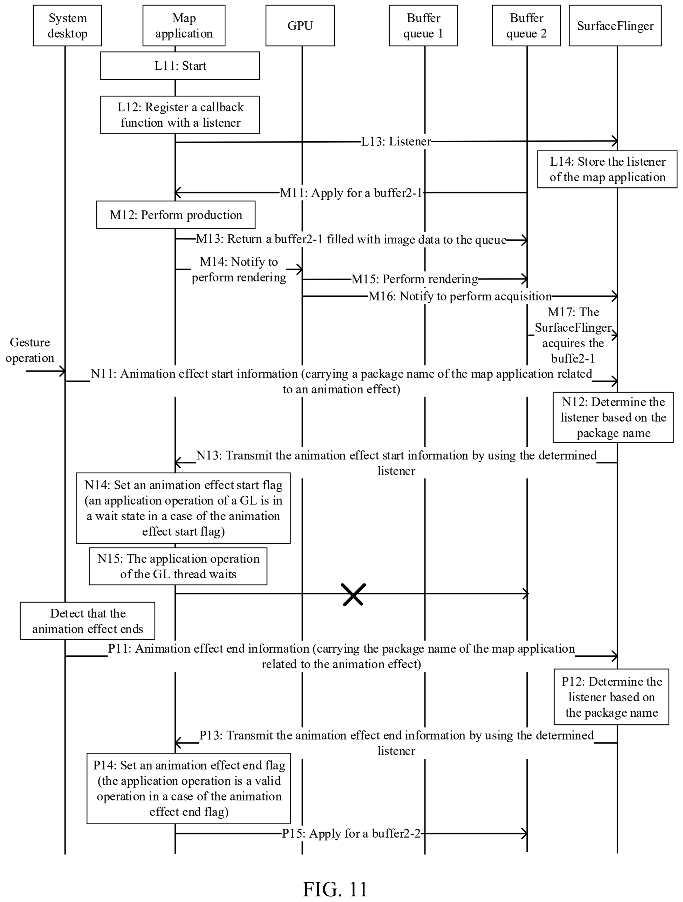

FIG. 11 is a timing diagram of reducing load of a GPU in a manner of actively stopping, on an application side, applying for a GraphicBuffer in the buffer queue 2 according to an embodiment of this application. In this embodiment, an operation performed by a UI thread of each application is no longer described, and the operation performed by the UI thread is not affected by whether an animation effect starts or ends.

Before the animation effect starts, the electronic device performs the following content:
L11: Start the map application.
L12: The map application registers a callback function with a listener.
L13: The map application sends the listener to the SurfaceFlinger.
L14: After receiving the listener, the SurfaceFlinger stores the listener in a layer of the map application.

In specific implementation, after the map application is started, a layer (layer) buffer queue corresponding to the map application can be applied to the SurfaceFlinger, and the SurfaceFlinger stores the listener in the layer corresponding to the map application.

M11: The map application applies for a GraphicBuffer2-1 from the buffer queue 2 by using the GL thread.

M12: The map application starts production after obtaining the GraphicBuffer2-1 through application by using the GL thread, to obtain a GraphicBuffer2-1 filled with image data.

M13: The map application sends, by using the GL thread, the GraphicBuffer2-1 filled with the image data back to the buffer queue 2.

M14: After sending the GraphicBuffer2-1 back to the buffer queue 2 by using the GL thread, the map application notifies the GPU to perform rendering.

M15: After receiving information notifying to perform rendering, the GPU starts to render the image data in the GraphicBuffer2-1.

M16: After the rendering ends, the GPU notifies the SurfaceFlinger to perform acquisition.

M17: The SurfaceFlinger acquires the GraphicBuffer2-1 in the buffer queue 2 and GraphicBuffers in buffer queues of other applications based on a Vsync signal, to obtain a composed image.

The foregoing procedure is a procedure in the non-animation effect period. The following describes a procedure in the animation effect period.

N11: After detecting a gesture operation, the system desktop (launcher) may determine start of the animation effect based on the gesture operation, and send the animation effect start information to the SurfaceFlinger.

When determining that the animation effect starts, the system desktop may determine a package name of the map application displayed by the electronic device during the gesture operation. Therefore, the package name of the map application is transmitted together when the animation effect start information is sent.

N12: After receiving the animation effect start information, the SurfaceFlinger determines the listener based on the package name of the map application carried in the animation effect start information. N13: The SurfaceFlinger transmits the animation effect start information to the map application by using the determined listener.

N14: The map application sets an animation effect start flag, where the application operation of the GL thread is in the wait state in a case of the animation effect start flag.

N15: When receiving a drawing task delivered by the map application, the GL thread of the map application applies for a GraphicBuffer from the buffer queue 2, where the application operation is in the wait (wait) state.

Because the application operation of the GL thread of the map application is in the wait state, the GraphicBuffer in the buffer queue 2 is not obtained through application, and subsequent drawing, rendering, and the like are not performed. Therefore, load of the GPU in the animation effect period is reduced, thereby reducing cases of stuttering or screen freezing in the animation effect period.

In actual application, the following may alternatively be set: In a case of the animation effect start flag, the application operation of the GL thread is an invalid operation. In this way, when the GL thread of the map application needs to apply for the GraphicBuffer in the buffer queue 2, the application is an invalid operation, and naturally, subsequent drawing is not performed. The GPU also does not render an image that is drawn by using the SurfaceView, thereby reducing load of the GPU in the animation effect period, and reducing cases of stuttering or screen freezing in the animation effect period.

In addition, if it is set that the application operation of the GL thread is an invalid operation in a case of the animation effect start flag, the application may be triggered to be stuck. Therefore, the application side may set timeout time. For example, if a GraphicBuffer is not obtained through application after specific duration, the application task may be triggered again.

After detecting that the animation effect ends, the system desktop needs to transmit the animation effect end information to the map application by using the SurfaceFlinger. The map application modifies the animation effect start flag to an animation effect end flag.

P11: After detecting that the animation effect ends, the system desktop (Launcher) sends the animation effect end information to the SurfaceFlinger, which carries the package name of the map application determined when the animation effect starts.

P12: After receiving the animation effect end information, the SurfaceFlinger determines the listener based on the package name of the map application carried in the animation effect end information.

P13: The SurfaceFlinger transmits the animation effect end information to the map application by using the determined listener.

P14: After receiving the animation effect end information, the map application sets the animation effect end flag.

The operation of applying for the GraphicBuffer is valid in a case of the animation effect end flag.

P15: The GL thread of the map application applies for a GraphicBuffer2-2 from the buffer queue 2.

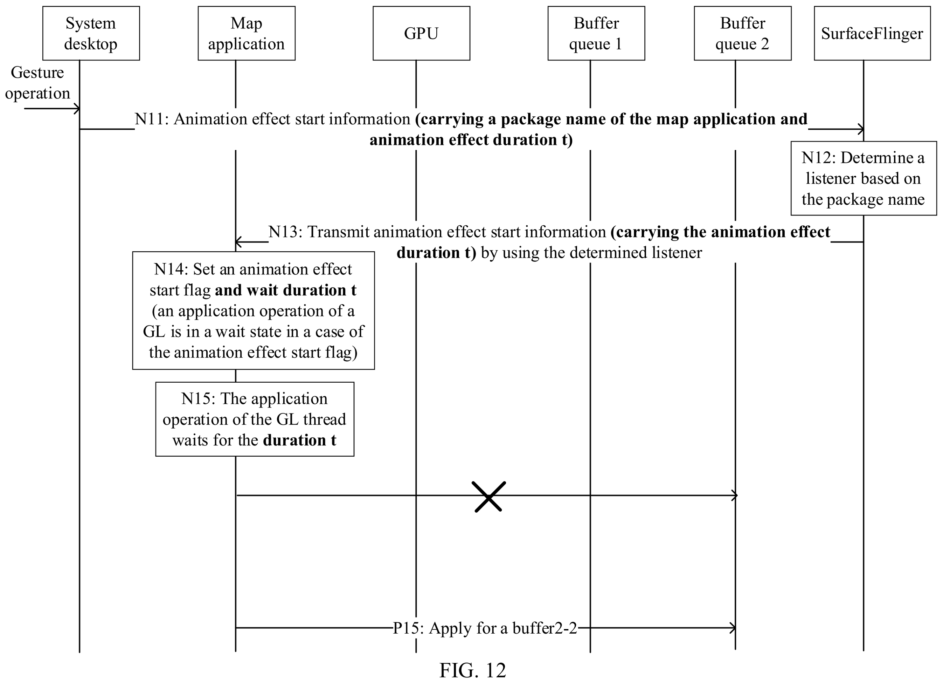

In another embodiment of this application, referring to FIG. 12, when the system desktop transmits the animation effect start information to the SurfaceFlinger in step N11, the animation effect start information may not only carry the package name of the map application related to the animation effect, but also carry animation effect duration t, where the duration may be denoted as first duration. When transmitting the animation effect start information to the map application, the SurfaceFlinger also transmits the animation effect duration t.

After receiving the animation effect start information and the animation effect duration t, the map application sets the animation effect start flag, and sets duration during which the application task is waiting to be t. The GL thread of the map application can continue to apply for the GraphicBuffer from the buffer queue 2 only after waiting for the duration t. Certainly, in actual application, the waiting duration may be different from the animation effect duration, for example, greater than the animation effect duration.

After the task of applying for the GraphicBuffer by the GL thread waits for specific duration, the GL thread continues, based on the drawing task of the map application, the operation of applying for the GraphicBuffer2-2 from the buffer queue 2.

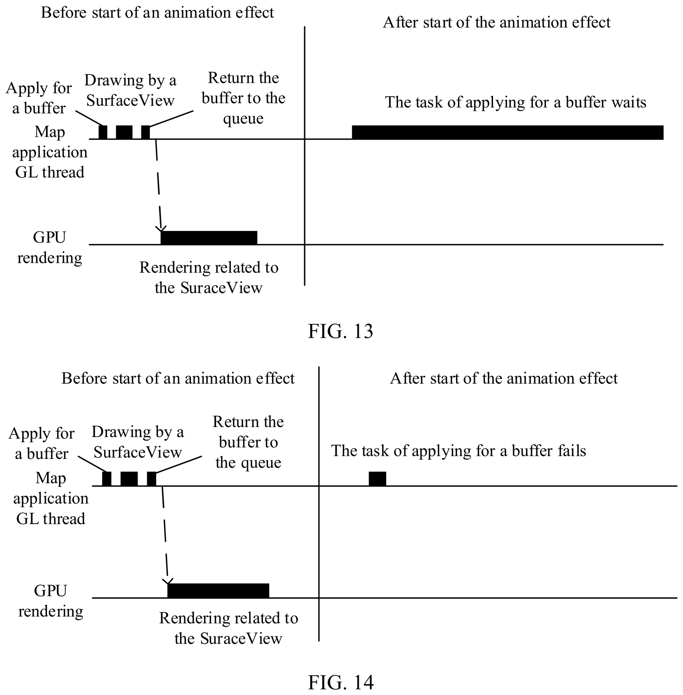

FIG. 13 and FIG. 14 are diagrams of comparison between operations performed by a GL thread of a map application before and after an animation effect when a manner of reducing load provided in the embodiments of this application is used.

Before the animation effect starts, the GL thread may apply for the GraphicBuffer, draws the GraphicBuffer, returns a GraphicBuffer drawn with image data to the queue, and notifies the GPU to perform rendering. After receiving information notifying to perform rendering, the GPU performs rendering related to the Surface View.

After the animation effect starts, due to various settings (for example, the foregoing various manners) for reducing the load of the GPU, the GL thread of the map application continues to be in the wait state or directly fails to apply for the GraphicBuffer when applying for the GraphicBuffer, that is, the GL thread of the map application cannot successfully obtain the GraphicBuffer through application. In this case, the GPU also does not perform rendering of an image drawn by using the SurfaceView, so that the load of the GPU can be reduced, and cases of stuttering or screen freezing can be reduced.

In another embodiment of this application, when performing composition, the SurfaceFlinger needs to wait for rendering of each layer participating in composition to end before performing the composition. In this case, when the SurfaceFlinger cannot obtain all layers or all NO-fence signals, the SurfaceFlinger cannot perform, at a predetermined frame rate, composition and subsequent sending for display, or stuttering or screen freezing occurs.

Some systems provide attribute configuration. The SurfaceFlinger reads the attribute configuration at startup. When the attribute is "always", the system locks all buffers without a NO-fence signal, that is, the SurfaceFlinger no longer waits for the NO-fence signal. Instead, the SurfaceFlinger arranges GraphicBuffers in the queued state in advance and transmits the GraphicBuffers to the HWC. The HWC determines, when composition is really performed, whether all NO-fence signals have been received. This is equivalent to saving waiting time of the SurfaceFlinger. However, there is a problem in this way: The HWC also needs to wait for the NO-fence signal. Therefore, if drawing and rendering related to the SurfaceView continues to be maintained, it may not be possible to perform, at a predetermined frame rate, composition and subsequent sending for display, and stuttering or screen freezing also occurs.

In this application, when drawing and rendering related to the SurfaceView are not suspended in the animation effect period, it is set that the SurfaceFlinger is prohibited from latching a buffer queue that is of a SurfaceView image and that does not release a NO-fence, that is, a GraphicBuffer whose rendering is not completed is not allowed to be acquired by the SurfaceFlinger. In this way, when performing composition, the SurfaceFlinger does not need to wait for the GraphicBuffer of the SurfaceView whose rendering is not completed.

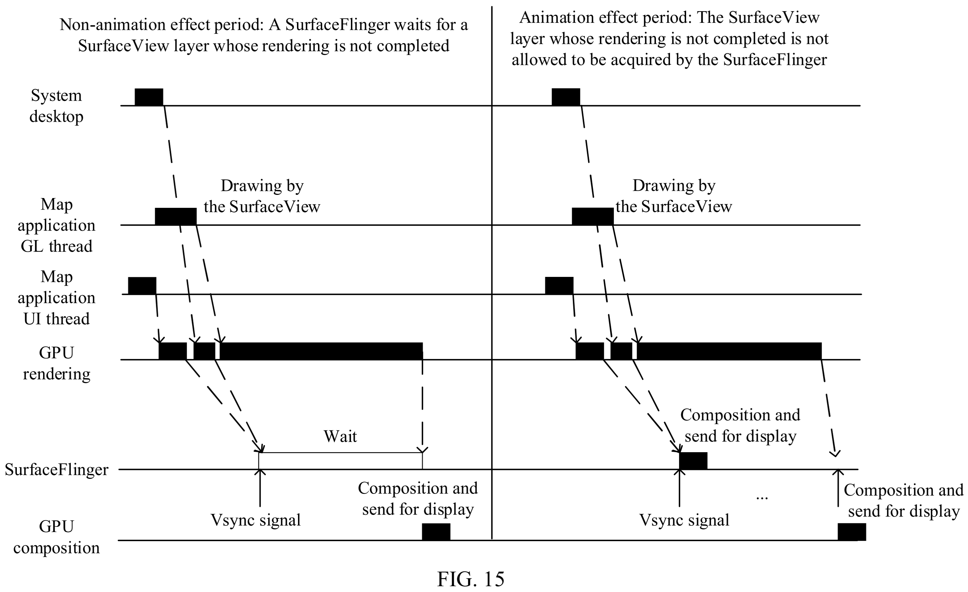

For other view-based buffer queues, a no-signal buffer latching mechanism is enabled, and the SurfaceFlinger or the HWC waits for a NO-fence signal during composition to acquire the GraphicBuffer. Referring to FIG. 15, when the SurfaceFlinger needs to wait for images in each buffer queue to be rendered and then composes these images, when a Vsync signal arrives, both rendering of an image drawn in the system desktop by using the view and rendering of an image drawn in the map application by using the view may be completed, and the SurfaceFlinger has received NO-fence signals of the foregoing two rendering processes. However, because the image drawn in the map application by using the view is not completed and a fence is not released, the SurfaceFlinger is blocked when performing composition, and the SurfaceFlinger needs to wait until the fence is obtained after image rendering corresponding to the SurfaceView is completed, to perform the composition of these layers. In actual application, the composition operation may be composed by the GPU.

In the animation effect period, when a GraphicBuffer whose rendering is not completed is not allowed to be acquired by the SurfaceFlinger, similarly, after the SurfaceFlinger receives the Vsync signal, when determining that rendering of an image drawn by using the view ends and the NO-fence signal is received and rendering of an image drawn by using the SurfaceView does not end and the NO-fence signal is not received, the SurfaceFlinger composes images other buffer queues different from the buffer queue corresponding to the SurfaceView. Using FIG. 15 as an example, an image in the buffer queue corresponding to the system desktop and an image in the buffer queue corresponding to the UI thread of the map application are composed. After the composition, a composed image may be sent for display. In this case, although content refreshed and displayed by the electronic device does not have updated of content drawn by SurfaceView, content that is of the map application and the system desktop and that is about the view are normally refreshed and displayed, so that phenomena of stuttering or screen freezing that occur because the electronic device always waits for the composition are reduced. In the animation effect period, the user does not care about content related to SurfaceView in the map application. Therefore, poor user experience caused by a lack of this part of content does not occur.

In all the foregoing examples, the map application is used as an example, and the animation effect in a period during which the electronic device switches from displaying the map application to displaying the system desktop is used as an example. In actual application, the map application may alternatively be any other application that performs drawing and rendering by using the SurfaceView during normal display, for example, a video application, a game application, or a camera application. Similarly, the animation effect period may alternatively be another period during which the user does not care much about content corresponding to the SurfaceView, for example, a hot start period and a multi-window start period of the foregoing application.

It should be understood that sequence numbers of the steps in the foregoing embodiments do not mean execution sequences. The execution sequences of the procedures should be determined based on functions and internal logic of the procedures, and should not be construed as any limitation on the implementation procedures of the embodiments of this application.

An embodiment of this application further provides a computer-readable storage medium. The computer-readable storage medium stores a computer program. When the computer program runs on an electronic device, the steps in the foregoing method embodiments may be implemented.

An embodiment of this application further provides a computer program product. When the computer program product runs on an electronic device or a wireless router, the electronic device is enabled to implement the steps in the foregoing method embodiments.

When an integrated unit is implemented in a form of a software functional unit and sold or used as an independent product, the integrated unit may be stored in a computer-readable storage medium. Based on such an understanding, in this application, all or some of the procedures in the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file form, some intermediate forms, or the like. The computer-readable medium may include at least any entity or apparatus that can carry the computer program code to a first device, a recording medium, a computer storage, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practice.

An embodiment of this application further provides a chip. The chip includes a processor. The processor is coupled to a storage, and the processor invokes a computer program stored in the storage, to implement the steps in any method embodiment of this application. The chip may be a single chip or a chip module including a plurality of chips.

In the foregoing embodiments, the descriptions of the embodiments have respective focuses. For a part that is not detailed or described in an embodiment, refer to related descriptions in other embodiments.

Persons of ordinary skill in the art may be aware that the example units and method steps described with reference to the embodiments disclosed in this specification can be implemented by electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that the implementation goes beyond the scope this application.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in the embodiments of this application, and shall fall within the protection scope of this application.

## Claims

1. An interface display method, comprising:
receiving a first operation of a user;
starting a first application in response to the first operation, wherein a layer of the first application comprises a layer drawn by a using view and a layer drawn by using a SurfaceView; and
displaying an application interface of the first application after the first application is started, wherein
in a process of displaying the application interface of the first application, the method further comprises:
rendering a first layer of the first application, wherein the first layer is a layer drawn by using the view;
rendering a second layer of the first application, wherein the second layer is a layer drawn by using the SurfaceView;
composing the first layer and the second layer to obtain a third layer;
displaying a first interface of the first application, wherein the first interface is obtained based on the third layer;
receiving a second operation of the user; and
switching, in response to the second operation, from displaying the first application to displaying a second application, wherein
in a process of switching from displaying the first application to displaying the second application, the method further comprises:
rendering a fourth layer of the first application, wherein the fourth layer is a layer drawn by using the view;
rendering a fifth layer of the second application, wherein the fifth layer is a layer drawn by using the view;
composing the fourth layer and the fifth layer to obtain a sixth layer; and
displaying a second interface in the switching process, wherein the second interface is obtained based on the sixth layer.

2. The method according to claim 1, wherein before the rendering a second layer of the first application, the method further comprises:
applying for a first buffer from a first buffer queue; and
drawing a layer in the first buffer by using the SurfaceView, to obtain the second layer of the first application.

3. The method according to claim 2, wherein the method is applied to an electronic device, the electronic device comprises a launcher and the first application, and after the receiving a second operation of the user, the method further comprises:
determining, by the launcher based on the second operation, to switch from the application interface of the first application to an application interface of the second application;
sending, by the launcher, animation effect start information and first duration to the first application, wherein after the first application receives the animation effect start information and the first duration, a task in which a rendering thread of the first application applies for a buffer from the first buffer queue is in a wait state; and
after the first duration following reception of the animation effect start information by the first application, restoring, to an execution state, the task in which the rendering thread applies for the buffer from the first buffer queue.

4. The method according to claim 3, wherein the electronic device further comprises a SurfaceFlinger, and after the first application is started, the method further comprises:
registering, by the first application, with a listener; and
sending, by the first application, the listener of the first application and a package name of the first application to the SurfaceFlinger; and receiving, by the SurfaceFlinger, the package name of the first application and the listener of the first application; and
the sending, by the launcher, animation effect start information and first duration to the first application comprises:
sending, by the launcher, the animation effect start information, the first duration, and the application package name of the first application to the SurfaceFlinger;
after receiving the animation effect start information, the first duration, and the application package name of the first application, determining, by the SurfaceFlinger, the listener of the first application based on the application package name of the first application; and
sending, by the SurfaceFlinger, the animation effect start information and the first duration to the first application by using the listener of the first application.

5. The method according to claim 2, wherein the method is applied to an electronic device, the electronic device comprises a launcher and the first application, and after the receiving a second operation of the user, the method further comprises:
determining, by the launcher based on the second operation, to switch from the application interface of the first application to an application interface of the second application; and
sending, by the launcher, animation effect start information to the first application, wherein after the first application receives the animation effect start information, a task in which a rendering thread of the first application applies for a buffer from the first buffer queue is in a wait state.

6. The method according to claim 5, wherein when the task in which the rendering thread of the first application applies for the buffer from the first buffer queue is in the wait state, the method further comprises:
sending, by the launcher, animation effect end information to the first application after detecting that an animation effect ends; and
after the first application receives the animation effect end information, restoring, to an execution state, the task in which the rendering thread applies for the buffer from the first buffer queue.

7. The method according to claim 2, wherein the method is applied to an electronic device, the electronic device comprises a launcher and a SurfaceFlinger, a data structure of a buffer in the first buffer queue comprises a block fence, and after the receiving a second operation of the user, the method further comprises:
determining, by the launcher based on the second operation, to switch from the application interface of the first application to an application interface of the second application;
sending, by the launcher, animation effect start information to the SurfaceFlinger; and
after receiving the animation effect start information, setting, by the SurfaceFlinger, the block fence in the data structure of the buffer in the first buffer queue to a first flag, wherein when the block fence in the buffer in the first buffer queue is the first flag, a task in which a rendering thread of the first application applies for a buffer from the first buffer queue is in a wait state.

8. The method according to claim 7, wherein when the task in which the rendering thread of the first application applies for the buffer from the first buffer queue is in the wait state, the method further comprises:
sending, by the launcher, animation effect end information to the SurfaceFlinger after detecting that an animation effect ends; and
after receiving the animation effect end information, setting, by the SurfaceFlinger, the block fence comprised in the data structure of the buffer in the first buffer queue to a second flag, wherein when the block fence in the buffer in the first buffer queue has the second flag, the task in which the rendering thread applies for the buffer from the first buffer queue is restored to an execution state.

9. The method according to claim 2, wherein the method is applied to an electronic device, the electronic device comprises a launcher, a SurfaceFlinger, and the first application, and the method further comprises:
determining, by the launcher based on the second operation, to switch from the application interface of the first application to an application interface of the second application;
sending, by the launcher, animation effect start information to the SurfaceFlinger; and
after receiving the animation effect start information, setting, by the SurfaceFlinger, a quantity of buffers in the first buffer queue to 1, and setting an acquisition flag bit of the first buffer queue to a third flag, wherein when a second buffer in the first buffer queue is not in an idle state, a task in which a rendering thread of the first application applies for the second buffer from the first buffer queue is in a wait state, and the second buffer is a buffer in the first buffer queue when the quantity of buffers in the first buffer queue is 1.

10. The method according to claim 9, wherein the electronic device further comprises a GPU, and after the setting, by the SurfaceFlinger, a quantity of buffers in the first buffer queue to 1, and setting an acquisition flag bit of the first buffer queue to a third flag, the method further comprises:
if the second buffer in the first buffer queue is in the idle state, obtaining, by the rendering thread of the first application, the second buffer from the first buffer queue through application;
drawing, by the rendering thread of the first application, a layer in the second buffer by using the SurfaceView, to obtain a seventh layer of the first application;
returning, by the rendering thread of the first application to the first buffer queue, the second buffer that stores the seventh layer, and setting the second buffer to a quened state;
sending, by the rendering thread of the first application, a rendering instruction to the GPU;
rendering, by the GPU, the seventh layer in the first buffer queue after receiving the rendering instruction;
sending, by the GPU, a composition instruction to the SurfaceFlinger after the rendering ends; and
not responding, by the SurfaceFlinger, to the composition instruction when the acquisition flag bit of the first buffer queue is the third flag.

11. The method according to claim 9, wherein the method further comprises:
sending, by the launcher, animation effect end information to the SurfaceFlinger after detecting that an animation effect ends; and
after receiving the animation effect end information, setting, by the SurfaceFlinger, the quantity of buffers in the first buffer queue to an initial quantity, and setting the acquisition flag bit of the first buffer queue to a fourth flag; and responding, by the SurfaceFlinger, to the composition instruction when the acquisition flag bit of the first buffer queue is the fourth flag, wherein the initial quantity is a quantity before the quantity of buffers in the first buffer queue is switched to 1.

12. The method according to any one of claims 1 to 11, wherein the first application is map application, a video application, or a game application.

13. The method according to claim 3, wherein the first duration is estimated duration of the process of switching from displaying the first application to displaying the second application.

14. An electronic device, wherein the electronic device comprises a processor, and the processor is configured to invoke a computer program in a storage to perform the method according to any one of claims 1-13.

15. A computer-readable storage medium, wherein the computer-readable storage medium stores computer instructions, and when the computer instructions are run on an electronic device, the electronic device is enabled to perform the method according to any one of claims 1-13.

16. A chip, wherein the chip comprises a processor, and the processor is configured to invoke a computer program in a storage to perform the method according to any one of claims 1-13.
